# EUROPÄISCHE PATENTSCHRIFT

(11) **EP 3 271 440 B1**
(45) Veröffentlichungstag und Bekanntmachung des Hinweises auf die Patenterteilung: **21.04.2021**
(21) Anmeldenummer: 16707638.9
(22) Anmeldetag: 03.03.2016
(51) Int. Cl.: C09K 19/34

(54) **FLÜSSIGKRISTALLINES MEDIUM**
LIQUID CRYSTALLINE MEDIUM
MILIEU À CRISTAUX LIQUIDES

(30) Priorität: 18.03.2015 DE 102015003602
(43) Veröffentlichungstag der Anmeldung: 24.01.2018
(73) Patentinhaber: Merck Patent GmbH, 64293 Darmstadt (DE)
(72) Erfinder: GOEBEL, Mark, Winchester SO23 8GJ (GB); FORTTE, Rocco, 65933 Frankfurt (DE); LIETZAU, Lars, 64380 Rossdorf (DE); HOCK, Christian, 63814 Mainaschaff (DE)
(86) Internationale Anmeldenummer: PCT/EP2016/000372
(87) Internationale Veröffentlichungsnummer: WO 2016/146240

(56) Entgegenhaltungen:
- US-A1- 2012 001 123
- US-A1- 2013 119 312

## Beschreibung

Die vorliegende Erfindung betrifft flüssigkristalline Medien (FK-Medien) mit Thiophenderivaten, die durch sterisch gehinderte Amine oder Aminderivate (HALS, engl. *hindered amine light stabiliser*) stabilisiert werden und Flüssigkristallanzeigen (FK-Anzeigen), die diese FK-Medien enthalten.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur. Daneben gibt es auch Zellen, die mit einem elektrischen Feld parallel zur Substrat- und Flüssigkristallebene arbeiten, wie beispielsweise die IPS-Zellen ("in-plane switching").

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertically Aligned). Auch bei Anzeigen, die den IPS- oder den FFS-Effekt verwenden, können dielektrisch negative Flüssigkristallmedien zum Einsatz kommen.

Vor allem die TN-, VA-, IPS- und FFS-Zellen sind derzeit kommerziell interessante Einsatzgebiete für die erfindungsgemäßen Medien.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedrige Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Die MFK-Anzeigen aus dem Stand der Technik genügen somit nicht den heutigen Anforderungen.

Für TV- und Videoanwendungen werden MFK-Anzeigen mit geringen Schaltzeiten benötigt. Solche geringen Schaltzeiten lassen sich besonders dann realisieren, wenn Flüssigkristallmedien mit geringen Werten für die Viskosität, insbesondere der Rotationsviskosität γ₁ verwendet werden. Verdünnende Zusätze verringern jedoch in der Regel den Klärpunkt und damit den Arbeitstemperaturbereich des Mediums.

Es besteht somit immer noch ein großer Bedarf an MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (outdoor-use, Automobil, Avionik)
- erhöhte Beständigkeit gegenüber UV-Strahlung (längere Lebensdauer)
- kleine Schwellenspannung

Mit den aus dem Stand der Technik zur Verfügung stehenden Medien ist es nicht möglich, diese Vorteile unter gleichzeitigem Erhalt der übrigen Parameter zu realisieren.

Aus dem Stand der Technik sind thiophenhaltige FK-Medien z.B. aus den Druckschriften WO2010/099853 A1 und DE10 2010 027 099 A1 sowie US 2013/0119312 A1 bekannt. Die WO2010/099853 A1 offenbart Verbindungen mit einer Thiophen-2,5-diyleinheit, die direkt mit einer in 2- und/oder 6-Position substituierten 1,4-Phenylen-1,4-einheit verknüpft ist. Die der WO2010/099853 A1 zugrundeliegende Aufgabe war die Entwicklung neuer Materialien für die Anwendung in FK-Anzeigen. Diese Aufgabe wurde gelöst durch die Bereitstellung von Verbindungen der allgemeinen Formel 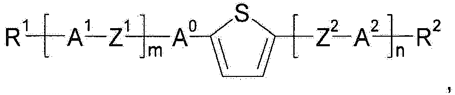 wobei A⁰ eine 2,6-Difluor-1,4-phenylen-, A¹ und A² neben anderen Bedeutungen eine 1,4-Phenylen- oder 1,4-Cyclohexyleneinheit bedeuten und Z¹ und Z² ein Brückenelement oder eine Einfachbindung bedeuten. Als konkrete Beispiele werden beispielsweise folgende Verbindungen beschrieben (siehe WO2010/099853 A1).

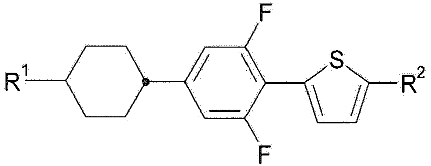

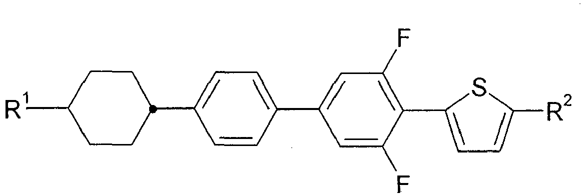

Für viele praktische Anwendungen in Flüssigkristallanzeigen sind die bekannten Flüssigkristallmedien enthaltend Thiophenverbindungen nicht stabil genug. Insbesondere die Belastung mit UV-Strahlung, aber auch bereits die Bestrahlung mit den üblichen Hintergrundbeleuchtungen führt zu einer Verschlechterung insbesondere der elektrischen Eigenschaften. So nimmt z.B. die Leitfähigkeit signifikant zu.

Die DE10 2010 027 099 A1 beschreibt FK-Medien, die die in WO2010/099853 offenbarten Verbindungen sowie Bithienylderivate der Formel 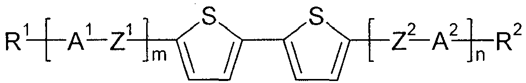 als Stabilisatoren enthalten. Vorzugsweise werden hierbei diese Bithienylderivate in Kombination mit Thiophen-1,1-dioxidderivaten der Formel 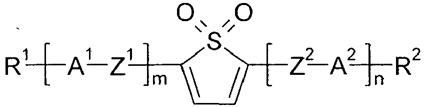 eingesetzt. In beiden vorangegangenen Formeln bedeuten A¹, A² beispielsweise 1,4-Phenylen oder 1,4-Cyclohexylen und Z¹ und Z² neben anderen Bedeutungen z.B. eine Einfachbindung. Als konkrete Beispiele werden folgende Verbindungen beschrieben (siehe DE10 2010 027 099 A1)

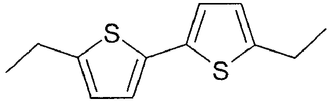

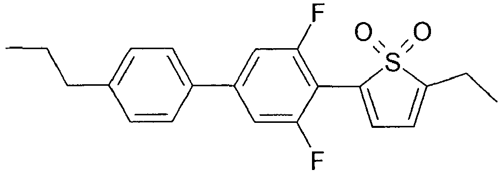

Zur Stabilisierung von Flüssigkristallmischungen wurde bereits die Verwendung von sogenannten "Hindered Amine Light Stabilisators", kurz HALS, vorgeschlagen.

HALS mit verschiedenen Substituenten am Stickstoffatom werden in Ohkatsu, Y., J. of Japan. Petroleum Institute, 51, 2008, Seiten 191-204 bezüglich ihrer pK_{B}-Werte verglichen. Dabei werden die folgenden Typen von Strukturformeln offenbart.

| Typ | Aktive Gruppe des Stabilisators |
|---|---|
| "HALS" | 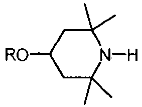 |
| "R-HALS" oder "NR-HALS" | 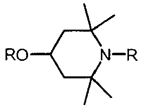 |
| "NOR-HALS" | 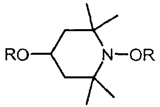 |

Die Verbindung TEMPOL der folgenden Formel 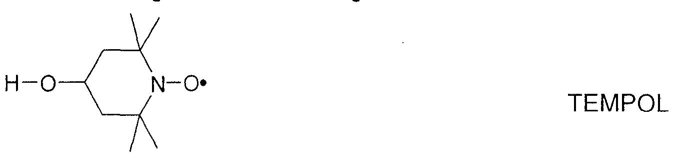 ist bekannt, sie wird z.B. in P.Miéville et al., Angew. Chem. 2010, 122, Seiten 6318-6321 erwähnt. Sie ist von verschiedenen Herstellern kommerziell erhältlich und wird z. B. in Formulierungen für Vorläufer für Polyolefine, Polystyrole, Polyamide, Beschichtungen und PVC als Polymerisationsinhibitor und, insbesondere in Kombination mit UV-Absorbern, als Licht- bzw. UV-Schutz eingesetzt.

In DE 102011117937.6 werden Flüssigkristallmischungen mit negativer dielektrischer Anisotropie, die TINUVIN® 770, einer Verbindung der Formel 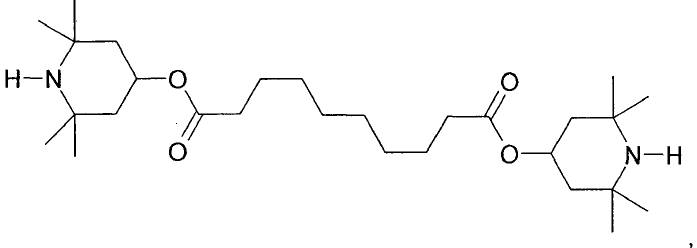 zur Stabilisierung enthalten, beschrieben.

Die DE 102011119144.9 und PCT/EP2011/005692 beschreiben Flüssigkristallmischungen, die unter anderem HALS-N-Oxide zur Stabilisierung enthalten.

Nematische Flüssigkristallmischungen mit negativer dielektrischer Anisotropie, die eine geringe Menge an TINUVIN® 770, als Stabilisatoren enthalten, werden auch z.B. in WO 2009/129911 A1 vorgeschlagen. Die entsprechenden Flüssigkristallmischungen haben jedoch für einige praktische Anwendungen in einigen Fällen nicht ausreichende Eigenschaften. Unter anderem sind sie manchmal nicht genügend stabil gegen die Belastung durch die Bestrahlung mit typischen CCFL-(Cold Cathod Fluorescent Lamp) Hintergrundbeleuchtungen oder zeigen Probleme bei der LTS (low temperature stability).

Die Verwendung verschiedener Stabilisatoren in flüssigkristallinen Medien wird z. B. in JP (S)55-023169 (A), JP (H)05-117324 (A), WO 02/18515 A1 und JP (H) 09-291282 (A) beschrieben.

Auch TINUVIN®123, eine Verbindung der Formel 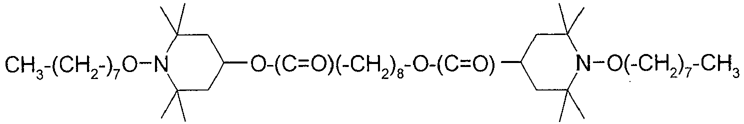 wurde zu Stabilisierungszwecken vorgeschlagen.

Mesogene Verbindungen mit einer oder zwei HALS-Einheiten werden in EP 1 1784 442 A1 offenbart.

Die Komplexität der Wirkungsmechanismen sowie die Tatsache, dass FK-Medien aus bis zu zehn oder noch mehr chemisch voneinander verschiedenen Einzelsubstanzen zusammengesetzt sind führen dazu, dass die Auswahl eines geeigneten Lichtstabilisators angesichts der Vielzahl der verfügbaren Materialien selbst für den Fachmann außerordentlich schwierig ist.

Der Erfindung lag als eine Aufgabe zugrunde, Medien insbesondere für derartige TN-, VA- oder IPS-Anzeigen bereitzustellen, welche die oben angegebenen gewünschten Eigenschaften besitzen und die oben angegebenen Nachteile nicht oder nur in geringerem Maße zeigen. Insbesondere sollten die FK-Medien schnelle Schaltzeiten und niedrige Rotationsviskositäten bei gleichzeitig hoher dielektrischer Anisotropie und hoher Doppelbrechung aufweisen. Darüber hinaus sollten die FK-Medien einen hohen Klärpunkt, einen breiten nematischen Phasenbereich und eine niedrige Schwellenspannung aufweisen.

Der Erfindung lag als weitere Aufgabe zugrunde, thiophenhaltige FK-Medien bereitzustellen, die die oben genannten Nachteile nicht oder nur in geringem Maße zeigen.

Überraschend wurde gefunden, dass die oben genannten Aufgaben gelöst werden können, indem man Thiophenderivate in Kombination mit HALS in FK-Medien, insbesondere in FK-Medien in FK-Anzeigen mit aktiver Adressierung, und in TN-, VA-, IPS- oder FFS-Anzeigen, verwendet. Die unten angegebene Kombination von Thiophenderivaten mit HALS führt zu FK-Medien mit den oben angegebenen gewünschten Eigenschaften.

Für den Fachmann war aufgrund des Standes der Technik nicht zu erwarten, dass die Verwendung von erfindungsgemäßen Thiophenderivaten in nematischen FK-Medien mit einer inhärent unverdrillten Phase, insbesondere in FK-Medien mit positiver dielektrischer Anisotropie, und in TN-, VA- IPS- und FFS-Anzeigen, unter Zusatz von HALS als Lichtstabilisatoren zu einer Verbesserung der Eigenschaften, d.h. bei hervorragender Lichtstabilität insbesondere zu schnellen Schaltzeiten und niedrigen Rotationsviskositäten bei gleichzeitig hoher dielektrischer Anisotropie, hoher Doppelbrechung und hohem spezifischen Widerstand, führen kann.

Gegenstand der vorliegenden Erfindung ist somit ein FK-Medium, dadurch gekennzeichnet, dass es eine oder mehrere Verbindungen der Formel I 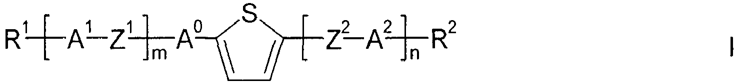 enthält, worin die einzelnen Reste folgende Bedeutung besitzen:
- R¹ und R²: H, F, Cl, Br, -CN, -SCN, -NCS, SF₅ oder geradkettiges oder verzweigtes Alkyl mit 1 bis 12 C-Atomen, worin auch eine oder mehrere nicht benachbarte CH₂-Gruppen jeweils unabhängig voneinander durch -CH=CH-, -C≡C-, -O-, -CO-, -CO-O-, -O-CO-, -O-CO-O- so ersetzt sein können, dass O-Atome nicht direkt miteinander verknüpft sind, und worin auch ein oder mehrere H-Atome durch F, Cl oder Br ersetzt sein können, wobei R¹ und R² bevorzugt Alkyl bedeuten
- A⁰, A¹, A²: jeweils unabhängig voneinander Phenylen-1,4-diyl, worin auch eine oder zwei CH-Gruppen durch N ersetzt sein können und ein oder mehrere H-Atome durch Halogen, CN, CH₃, CHF₂, CH₂F, CF₃, OCH₃, OCHF₂ oder OCF₃ ersetzt sein können, Cyclohexan-1,4-diyl, worin auch eine oder zwei nicht benachbarte CH₂-Gruppen unabhängig voneinander durch O und/oder S ersetzt sein können, und ein oder mehrere H-Atome durch F ersetzt sein können, Cyclohexen-1,4-diyl, Bicyclo[1.1.1]pentan-1,3-diyl, Bicyclo[2.2.2]octan-1,4-diyl, Spiro[3.3]heptan-2,6-diyl, Tetrahydropyran-2,5-diyl, oder 1,3-Dioxan-2,5-diyl, wobei A⁰ bevorzugt 2,6-Difluor-1,4-phenylen und A¹ bevorzugt 1,4-Cyclohexylen, 1,4-Phenylen, 2-Fluor-1,4-phenylen, besonders bevorzugt 1,4-Phenylen bedeuten,
- Z¹ und Z²: jeweils unabhängig voneinander -CF₂O-, -OCF₂-, -CH₂O-, -OCH₂-, -CO-O-, -O-CO-, -C₂H₄- -C₂F₄-, -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C≡C- oder eine Einfachbindung, und
- m und n: jeweils unabhängig voneinander 0, 1, 2 oder 3, wobei m+n bevorzugt 1, 2 oder 3, besonders bevorzugt 1 ist,
und eine oder mehrere Verbindungen der Formel II in einer Gesamtkonzentration von 50 ppm bis 2000 ppm enthält, 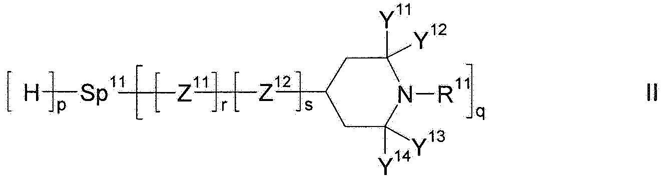 worin
- q: 1 oder 2,
- p: (2-q),
- Z¹¹ und Z¹²: unabhängig voneinander -O-, -(C=O)-, oder eine Einfachbindung, jedoch nicht beide gleichzeitig -O-,
- r und s: unabhängig voneinander 0 oder 1,
- Y¹¹ bis Y¹⁴: jeweils unabhängig voneinander Alkyl mit 1 bis 4 C-Atomen und alternativ auch unabhängig voneinander eines oder beide der Paare (Y¹¹ und Y¹²) und (Y¹³ und Y¹⁴) gemeinsam eine zweibindige Gruppe mit 3 bis 6 C-Atomen, bevorzugt CH₃
- R¹¹: bei jedem Auftreten unabhängig voneinander H, Alkyl, O-Alkyl, O-Cycloalkyl, -O° oder -OH,
- Sp¹¹: eine geradkettige oder verzweigte Alkylkette mit 2-20 C-Atomen, in der eine -CH₂-Gruppe oder mehrere-CH₂-Gruppen durch -O- ersetzt sein können, jedoch nicht zwei benachbarte -CH₂-Gruppen durch -O- ersetzt sein können, einen Kohlenwasserstoffrest, der eine Cycloalkyl- oder eine Alkylcycloalkyleinheit enthält, und in dem eine-CH₂- -Gruppe oder mehrere -CH₂-Gruppen durch -O- ersetzt sein können, jedoch nicht zwei benachbarte -CH₂-Gruppen durch -O- ersetzt sein können,
bedeuten, und
eine oder mehrere Verbindungen der Formel VIII-1a enthält, 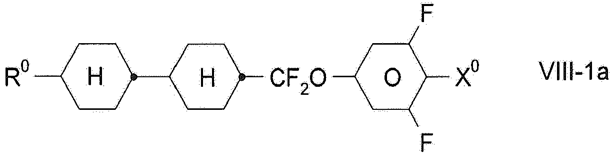 worin
- R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 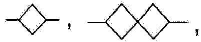 -O-, -CO-O- oder -O-CO- so ersetzt sein können, dass O-Atome nicht direkt miteinander verknüpft sind, und worin auch ein oder mehrere H-Atome durch Halogen ersetzt sein können,
- X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
bedeuten,
und
eine oder mehrere Verbindungen ausgewählt aus der Gruppe bestehend aus den folgenden Formeln enthält: 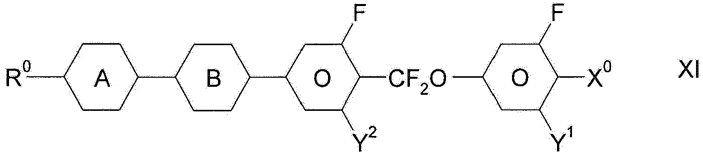 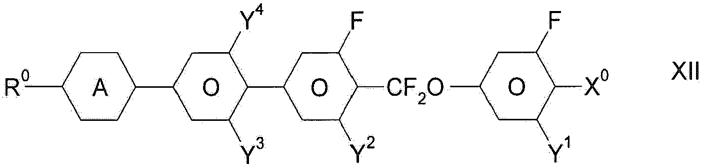 worin
- R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 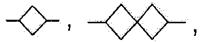 -O-, -CO-O- oder -O-CO- so ersetzt sein können, dass O-Atome nicht direkt miteinander verknüpft sind, und worin auch ein oder mehrere H-Atome durch Halogen ersetzt sein können,
- X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
- Y¹⁻⁴: jeweils unabhängig voneinander H oder F, und 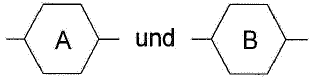 jeweils unabhängig voneinander 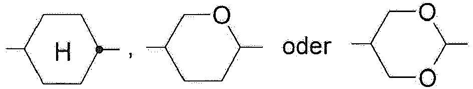 bedeuten,
wobei das Medium eine dielektrische Anisotropie Δε von ≥ +9 aufweist.

Ein weiterer Gegenstand der Erfindung ist die Verwendung des erfindungsgemäßen Mediums in elektrooptischen Vorrichtungen, insbesondere in FK-Anzeigen.

Ein weiterer Gegenstand der Erfindung ist eine FK-Anzeige enthaltend ein erfindungsgemäßes FK-Medium, insbesondere eine TN-, VA-, IPS-oder FFS-Anzeige.

Bevorzugt sind Medien enthaltend die Verbindungen der Formel I, worin A⁰ ein Phenylen-1,4-diyl, worin auch eine oder zwei CH-Gruppen durch N ersetzt sein können und ein oder mehrere H-Atome durch Halogen, CN, CH₃, CHF₂, CH₂F, OCH₃, OCHF₂ , CF₃ oder OCF₃ ersetzt sein können, bedeutet,
besonders bevorzugt, worin
A⁰ 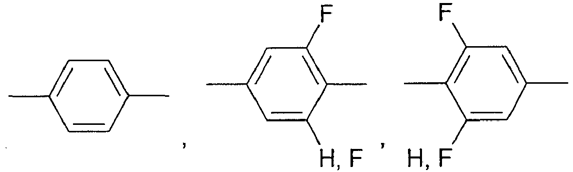 oder 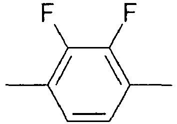 und ganz besonders bevorzugt, worin
A⁰ 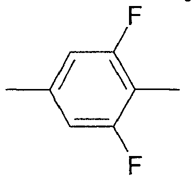 bedeutet.

Die bevorzugten Verbindungen der Formel I führen zu Medien mit besonders hohem Klärpunkt, geringer Rotationsviskosität, breiter nematischer Phase, hoher Doppelbrechung und guter Stabilität.

Ferner bevorzugt sind Verbindungen der Formel I, worin m und n 0, 1 oder 2, besonders bevorzugt 0 oder 1 bedeuten. Besonders bevorzugt sind Verbindungen der Formel I, worin n 0 bedeutet, also der Thiophenring ein endständiger Ring ist, und m 1, 2 oder mehr bedeutet. Weiterhin bevorzugt sind Verbindungen der Formel I, worin m 0, 1 oder 2, vorzugsweise 1 oder 2, und ganz besonders bevorzugt 1 bedeutet.

A¹ und A² in Formel I bedeuten besonders bevorzugt Phenylen-1,4-diyl, welches auch ein oder mehrfach durch F substituiert sein kann, ferner Cyclohexan-1,4-diyl, Tetrahydropyran-2,5-diyl, oder 1,3-Dioxan-2,5-diyl.

Z¹ und Z² in Formel I bedeuten besonders bevorzugt -CF₂O-, -OCF₂- oder eine Einfachbindung, insbesondere eine Einfachbindung.

Besonders bevorzugt bedeuten A¹ und A² in Formel I 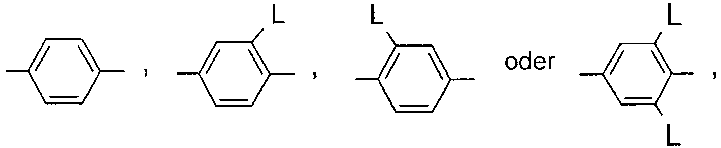 bevorzugt unsubstituiertes 1,4-Phenylen,
worin L Halogen, CF₃ oder CN, vorzugsweise F bedeutet.

Ferner bevorzugt sind Verbindungen der Formel I, worin
R¹ und R² jeweils unabhängig voneinander H, F, Cl, Br, -CN, -SCN, -NCS, SF₅, Halogen oder optional durch Halogen, insbesondere durch F, substituiertes Alkyl, Alkenyl oder Alkinyl mit 1 bis 8, vorzugsweise 1 bis 5 C-Atomen bedeuten.

Besonders bevorzugte Reste R¹ und R² in Formel I bedeuten H, Halogen, oder optional durch Halogen, insbesondere durch F, substituiertes Alkyl, Alkenyl, Alkinyl oder Alkoxy mit 1 bis 12, vorzugsweise 1 bis 8 C-Atomen, besonders bevorzugt H, F, Alkyl, Alkenyl oder Alkinyl mit 1 bis 8 C-Atomen. Bevorzugt bedeutet wenigstens ein Rest kein H, besonders bevorzugt sind beide Reste R¹ und R² nicht H. Ganz besonders bevorzugt ist R¹ gleich Alkyl. Ferner bevorzugt ist R² H, Alkyl oder Fluor. Ganz besonders bevorzugt ist R¹ Alkyl und R² H oder Alkyl. R¹, R² bedeuten jeweils unabhängig voneinander ganz besonders bevorzugt unverzweigtes Alkyl mit 1-5 C-Atomen. Falls R¹ und R² substituiertes Alkyl, Alkoxy, Alkenyl oder Alkinyl bedeuten, beträgt die Gesamtzahl der C-Atome in beiden Gruppen R¹ und R² vorzugsweise weniger als 10.

Bevorzugte Alkylgruppen sind beispielsweise Methyl, Ethyl, n-Propyl, n-Butyl, n-Pentyl, n-Hexyl, n-Heptyl und n-Octyl.

Bevorzugte Alkenylgruppen sind beispielsweise Ethenyl, Propenyl, Butenyl und Pentenyl.

Bevorzugte Alkinylgruppen sind beispielsweise Ethinyl, Propinyl, Butinyl, Pentinyl, Hexinyl, Heptinyl und Octinyl.

Bevorzugte Alkoxygruppen sind beispielsweise Methoxy, Ethoxy, n-Propoxy, n-Butoxy, n-Pentoxy, n-Hexoxy, n-Heptoxy, n-Octoxy.

Halogen bedeutet vorzugsweise F oder Cl.

Besonders bevorzugte Verbindungen der Formel I sind solche ausgewählt aus folgenden Unterformeln 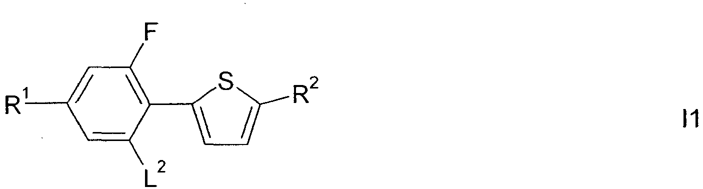 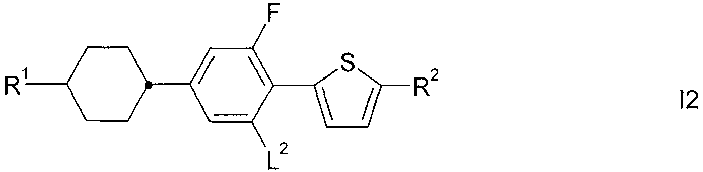 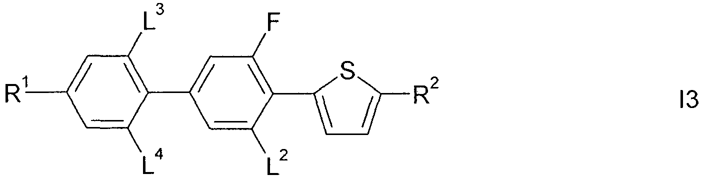 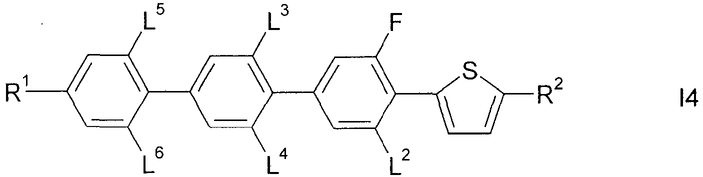 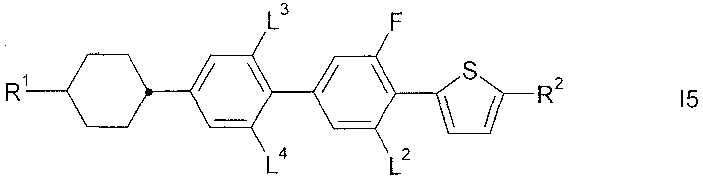 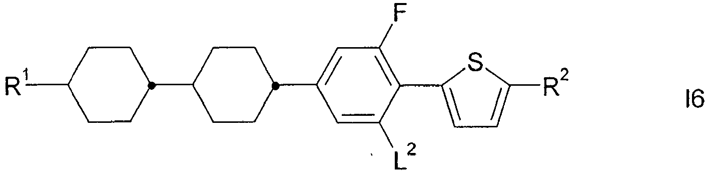 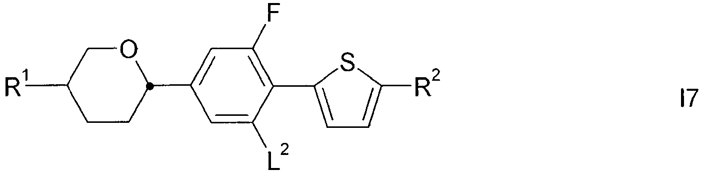 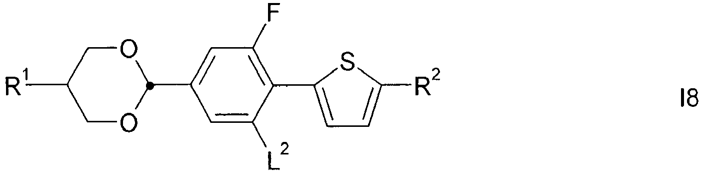 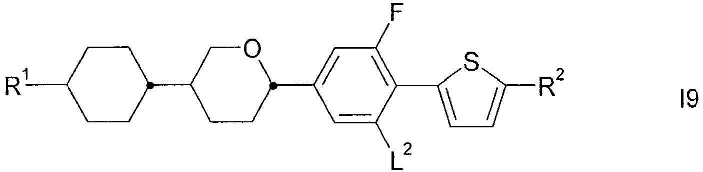 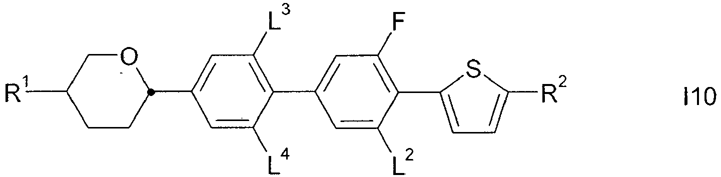 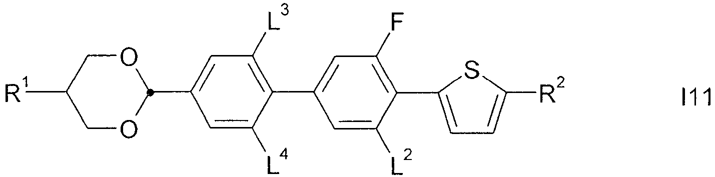 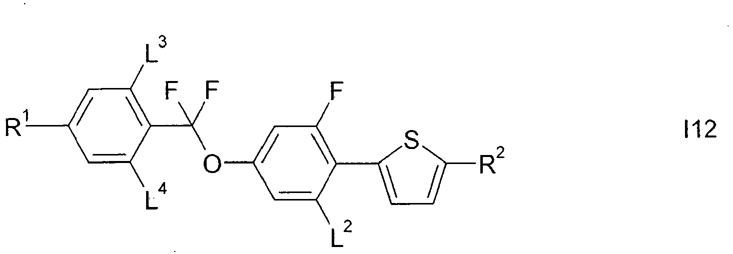 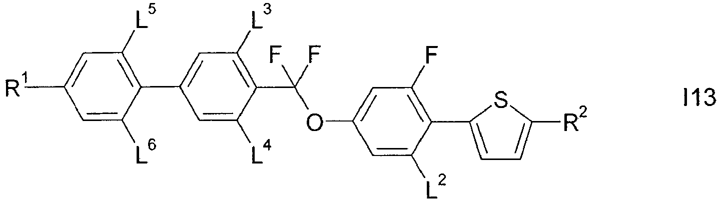 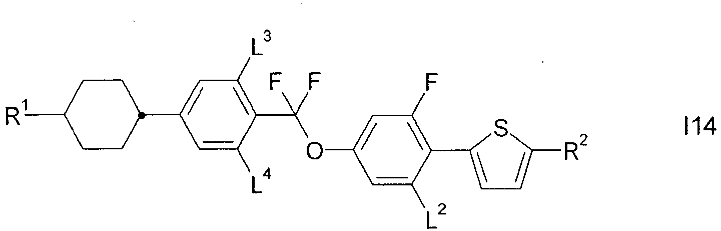 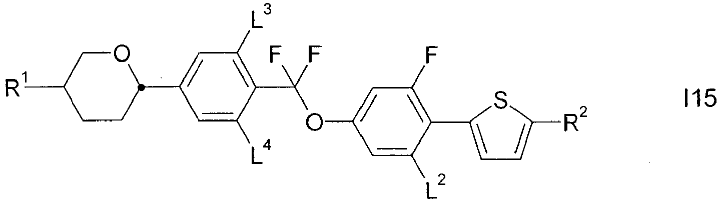 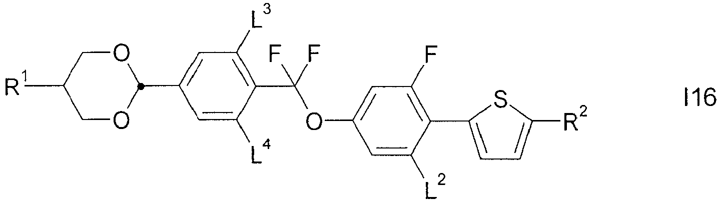 worin R¹ und R² die vor- und nachstehend angegebenen Bedeutungen besitzen, und L¹ bis L⁶ unabhängig H oder F bedeuten. R¹ und R² bedeuten darin vorzugsweise optional fluoriertes Alkyl, Alkenyl, Alkinyl oder Alkoxy mit 1 bis 12 C-Atomen, besonders bevorzugt optional fluoriertes Alkyl, Alkenyl oder Alkinyl mit 1 bis 5 C-Atomen. L² bedeutet in den Formeln bevorzugt F. In den Formeln I3 bis I11 bedeuten L³ und L⁴ bevorzugt H. In den Formeln I12 bis I16 bedeuten L³ und L⁴ bevorzugt F. Bevorzugte erfindungsgemäße Medien enthalten Verbindungen ausgewählt aus den Formel I3 und I5.

Die Verbindungen der Formel I können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden.

Die Synthese von geeigneten Thiophenen der Formel I ist bekannt, z.B. aus WO 2009/129915 A1, WO2010/099853 A1 und WO2010/094455 A1.

Bevorzugt sind Medien enthaltend die Verbindungen der Formel II, worin n 1, r 1, s 1, Y¹¹, Y¹², Y¹³ und Y¹⁴ Methyl, R¹¹ H oder -O^{•}, Z¹¹ C=O und Z¹² O bedeuten.
Weiterhin bevorzugt sind Medien enthaltend die Verbindungen der Formel II, worin n 2, r 1, s 1, Y¹¹, Y¹², Y¹³ und Y¹⁴ Methyl, R¹¹ H oder -O^{•}, Z¹¹ C=O und Z¹² O bedeuten.

Ganz besonders bevorzugte Verbindungen der Formel II sind solche ausgewählt aus folgenden Unterformeln

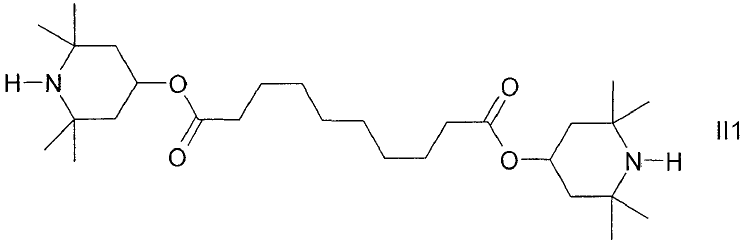

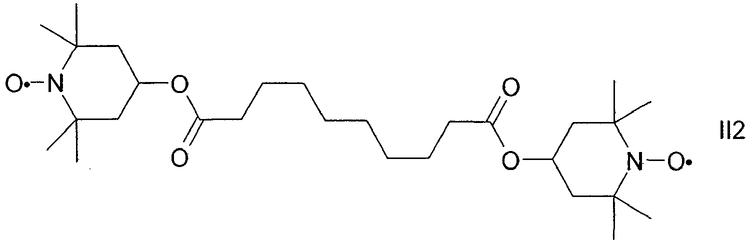

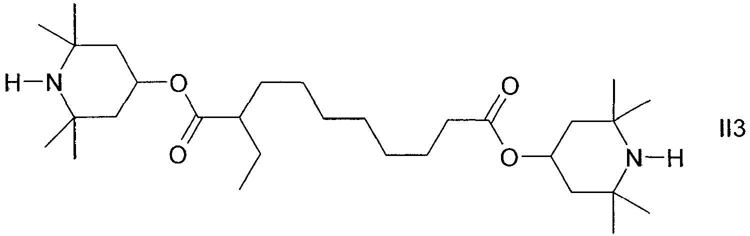

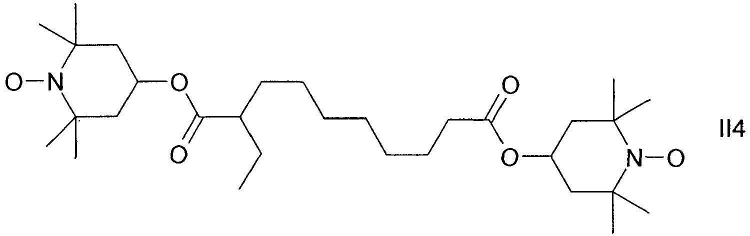

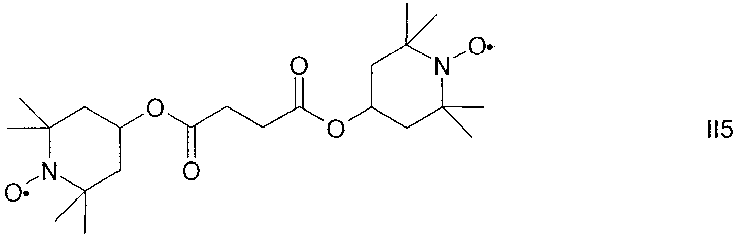

Die Verbindungen der Formel II können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden oder sind kommerziell erhältlich.

Besonders bevorzugte erfindungsgemäße FK-Medien werden im Folgenden genannt:
- FK-Medium, welches zusätzlich eine oder mehrere Verbindungen der Formel III und/oder IV enthält: 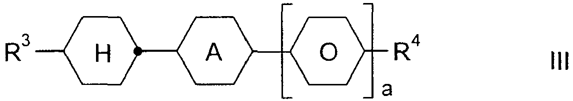 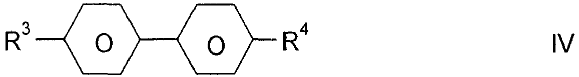 worin
   - A: 1,4-Phenylen oder trans-1,4-Cyclohexylen bedeutet,
   - a: 0 oder 1 ist,
   - R³: Alkyl oder Alkenyl mit bis zu 9 C-Atomen, vorzugsweise Alkenyl mit 2 bis 9 C-Atomen bedeutet, und
   - R⁴: Alkyl mit 1 bis 12 C-Atomen, wobei auch eine oder zwei nicht benachbarte CH₂-Gruppen durch -O-, -CH=CH-, -CO-, -O-CO-oder -CO-O- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.
   Die Verbindungen der Formel III sind vorzugsweise ausgewählt aus der Gruppe bestehend aus folgenden Formeln: 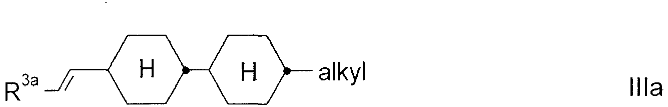 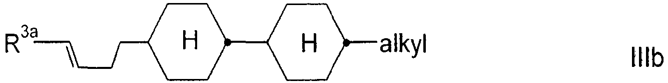 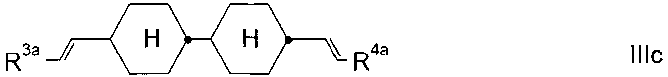 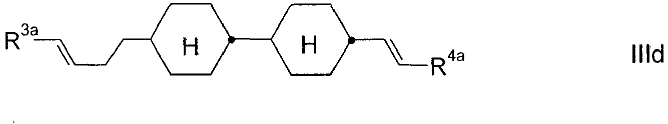 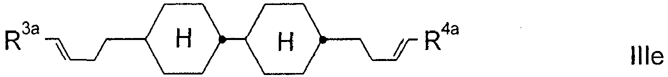 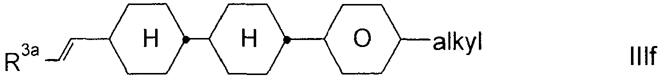 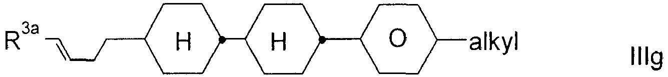 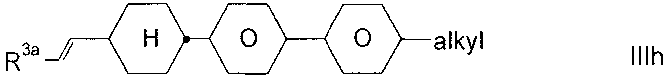 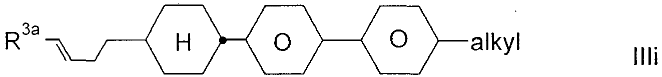 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formel IIIa und IIIf, insbesondere worin R^{3a} H oder CH₃, vorzugsweise H, bedeutet, und Verbindungen der Formel IIIc, insbesondere worin R^{3a} und R^{4a} H, CH₃ oder C₂H₅ bedeuten. Die Verbindungen der Formel IV sind vorzugsweise ausgewählt aus der Gruppe bestehend aus den folgenden Formeln: 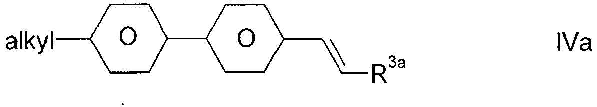 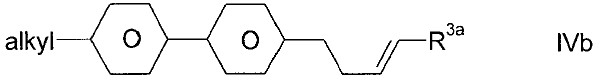 worin "alkyl" und R^{3a} die oben angegebenen Bedeutungen haben und R^{3a} vorzugsweise H oder CH₃ bedeutet. Besonders bevorzugt sind Verbindungen der Formel IVb;
- FK-Medium, welches zusätzlich eine oder mehrere Verbindungen ausgewählt aus der Gruppe bestehend aus den folgenden Formeln enthält: 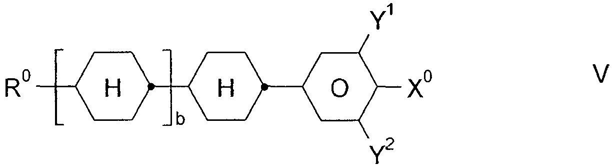 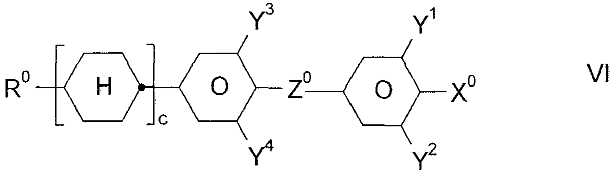 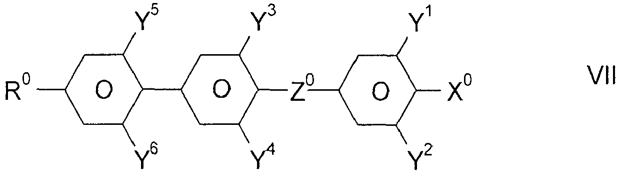 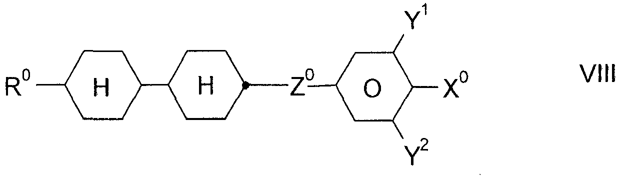 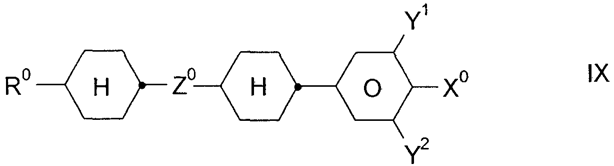 worin
   - R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 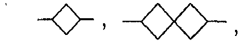 -O-, -CO-O- oder -O-CO- so ersetzt sein können, dass O-Atome nicht direkt miteinander verknüpft sind, und worin auch ein oder mehrere H-Atome durch Halogen ersetzt sein können,
   - X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
   - Y¹⁻⁶: jeweils unabhängig voneinander H oder F,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
   - b und c: jeweils unabhängig voneinander 0 oder 1
   bedeuten.
   In den Verbindungen der Formel V bis IX bedeutet X⁰ vorzugsweise F oder OCF₃, ferner OCHF₂, CF₃, CF₂H, Cl, OCH=CF₂. R⁰ ist vorzugsweise geradkettiges Alkyl oder Alkenyl mit jeweils bis zu 6 C-Atomen. Die Verbindungen der Formel V sind vorzugsweise ausgewählt aus der Gruppe bestehend aus den folgenden Formeln: 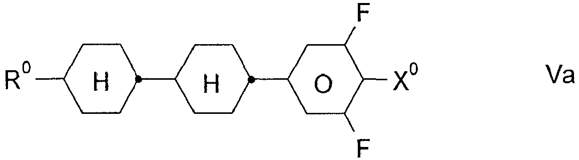 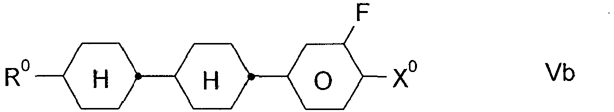 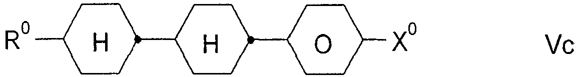 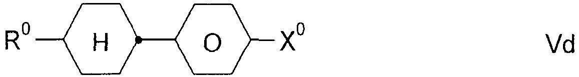 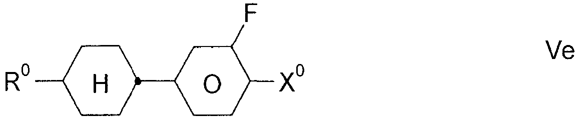 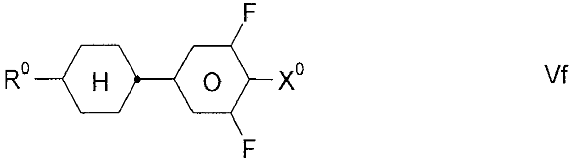 worin R⁰ und X⁰ die oben angegebenen Bedeutungen haben.
   Vorzugsweise bedeutet in Formel V R⁰ Alkyl mit 1 bis 8 C-Atomen und X⁰ F, Cl, OCHF₂ oder OCF₃, ferner OCH=CF₂. In der Verbindung der Formel Vb bedeutet R⁰ vorzugsweise Alkyl oder Alkenyl. In der Verbindung der Formel Vd bedeutet X⁰ vorzugsweise Cl, ferner F. Die Verbindungen der Formel VI sind vorzugsweise ausgewählt aus der Gruppe bestehend aus den folgenden Formeln: 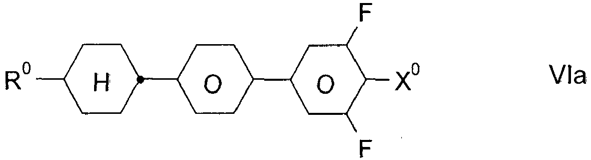 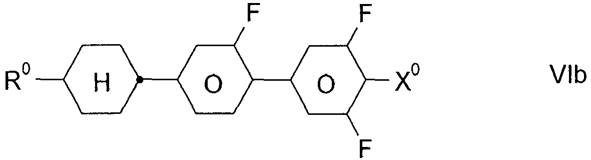 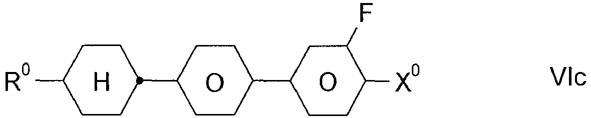 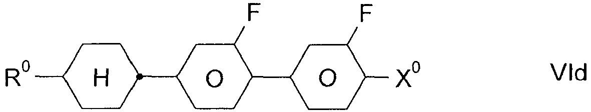 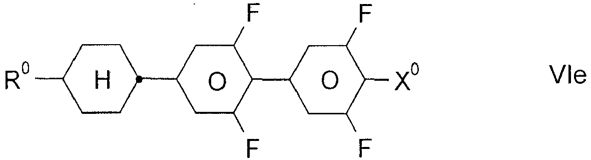 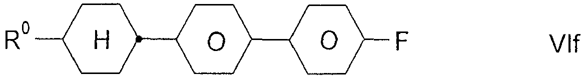 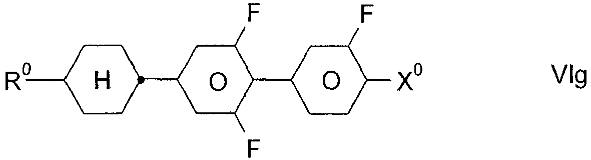 worin R⁰ und X⁰ die oben angegebenen Bedeutungen haben. Vorzugsweise bedeutet R⁰ in Formel VI Alkyl mit 1 bis 8 C-Atomen und X⁰ F;
- FK-Medium, welches eine oder mehrere Verbindungen der Formel VII-1 enthält: 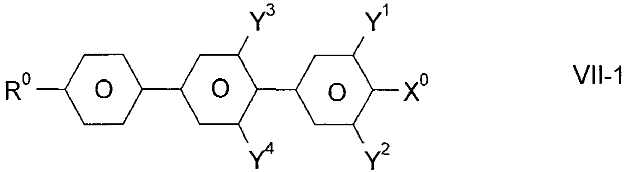 worin Y¹ bevorzugt F bedeutet,
   besonders bevorzugt solche ausgewählt aus der Gruppe bestehend aus den folgenden Formeln: 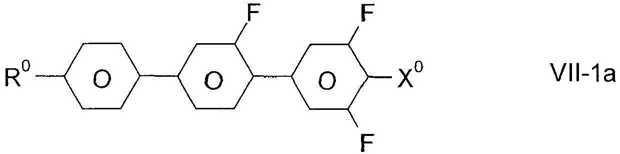 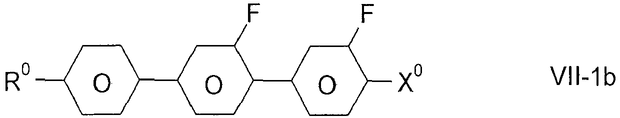 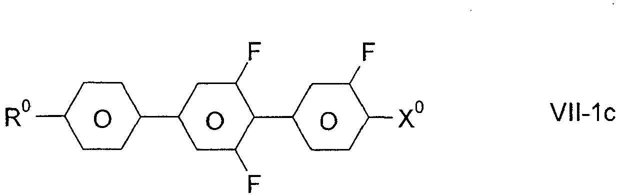 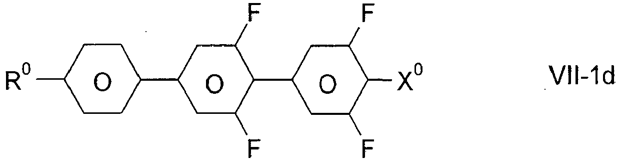 worin R⁰ und X⁰ die oben angegebenen Bedeutungen haben. Vorzugsweise bedeutet R⁰ in Formel VII Alkyl mit 1 bis 8 C-Atomen und X⁰ F, ferner OCF₃.
- FK-Medium, welches eine oder mehrere Verbindungen der Formel VII-2 enthält: 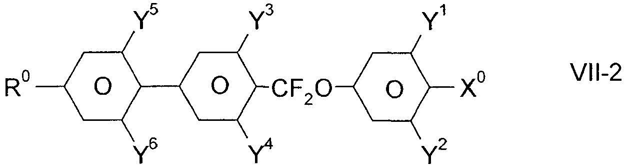 besonders bevorzugt solche ausgewählt aus der Gruppe bestehend aus den folgenden Formeln: 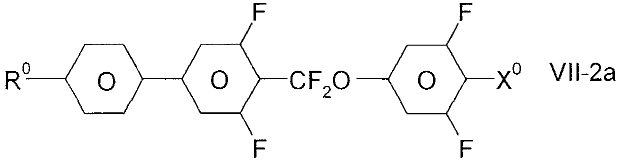 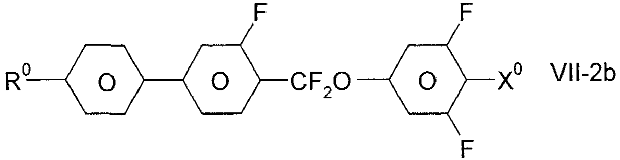 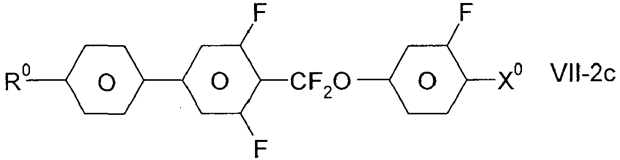 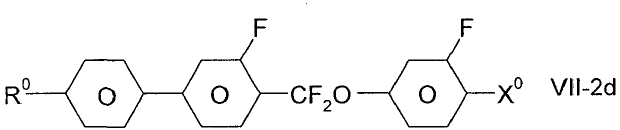 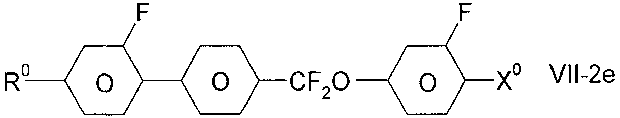 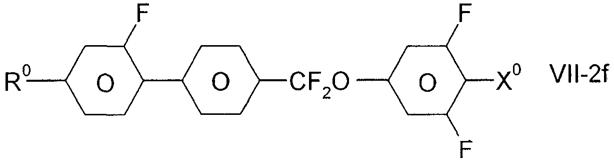 worin R⁰ und X⁰ die oben angegebenen Bedeutungen haben.
   Vorzugsweise bedeutet R⁰ in Formel VII Alkyl mit 1 bis 8 C-Atomen und X⁰ F;
- FK-Medium, welches vorzugsweise eine oder mehrere Verbindungen der Formel VIII, worin Z⁰ -CF₂O-, -CH₂CH₂ oder -COO- bedeutet, enthält, besonders bevorzugt solche ausgewählt aus der Gruppe bestehend aus den folgenden Formeln: 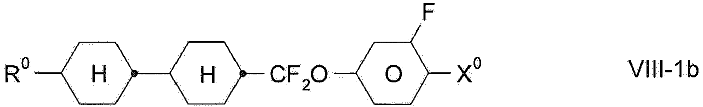 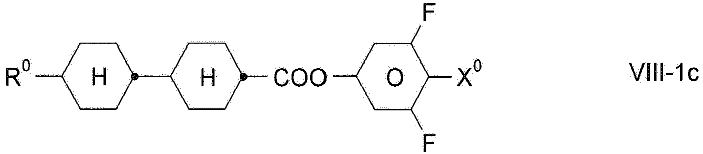 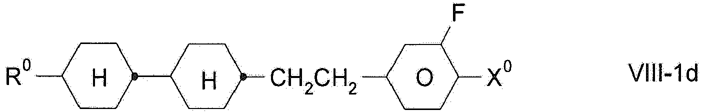 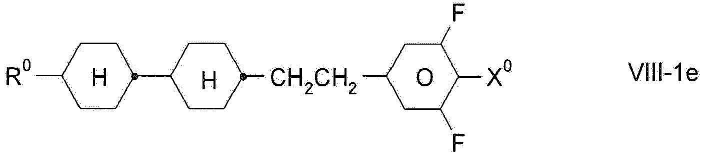 worin R⁰ und X⁰ die oben angegebenen Bedeutungen haben. Vorzugsweise bedeutet R⁰ in Formel VIII Alkyl mit 1 bis 8 C-Atomen und X⁰ F, ferner OCF₃.
   Die Verbindungen der Formel IX sind vorzugsweise ausgewählt aus der Gruppe bestehend aus den folgenden Formeln: 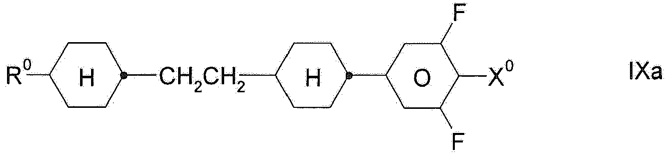 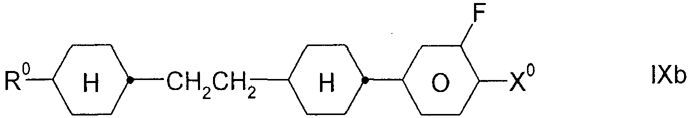 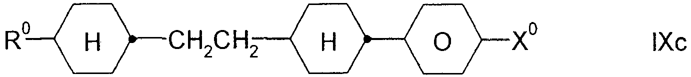 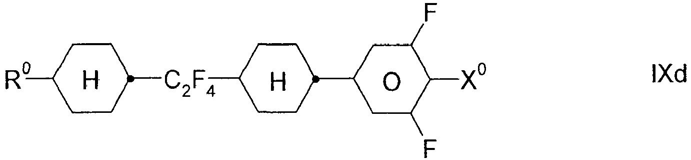 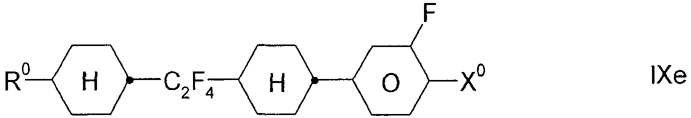 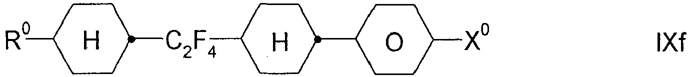 worin R⁰ und X⁰ die oben angegebenen Bedeutungen haben. Vorzugsweise bedeutet R⁰ einen geradkettigen Alkylrest mit 1 bis 8 C-Atomen. X⁰ bedeutet vorzugsweise F.
- FK-Medium, welches zusätzlich eine oder mehrere Verbindungen der folgenden Formel enthält: 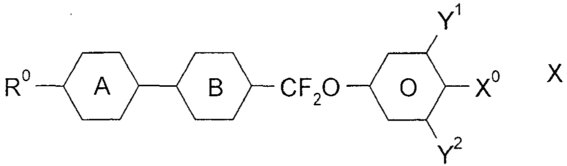 worin R⁰, X⁰, Y¹ und Y² die oben angegebene Bedeutung besitzen, und 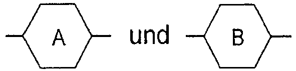 jeweils unabhängig voneinander 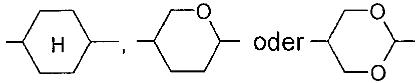 bedeuten, wobei die Ringe A und B nicht beide gleichzeitig Cyclohexylen bedeuten;
   Die Verbindungen der Formel X sind vorzugsweise ausgewählt aus der Gruppe bestehend aus den folgenden Formeln: 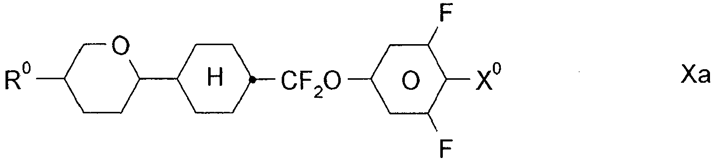 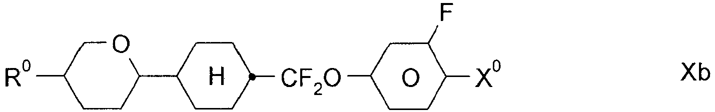 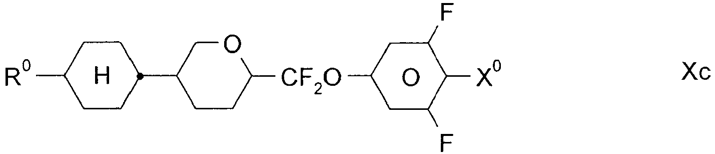 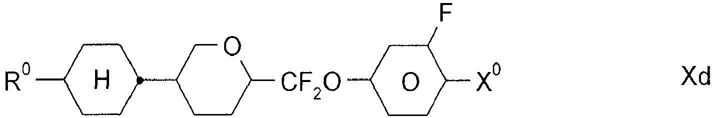 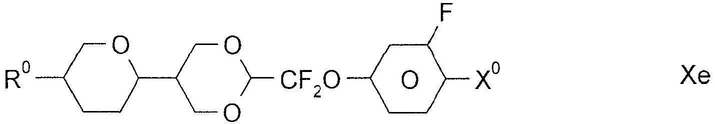 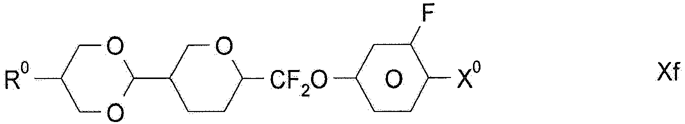 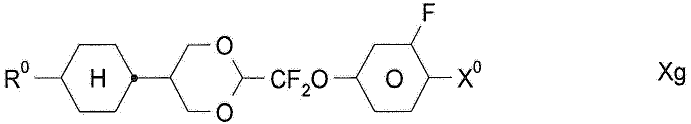 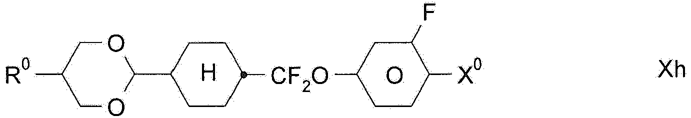 worin R⁰ und X⁰ die oben angegebenen Bedeutungen haben. Vorzugsweise bedeutet R⁰ Alkyl mit 1 bis 8 C-Atomen und X⁰ F. Besonders bevorzugt sind Verbindungen der Formel Xa;
   Die Verbindungen der Formeln XI und XII sind vorzugsweise ausgewählt aus der Gruppe bestehend aus den folgenden Formeln: 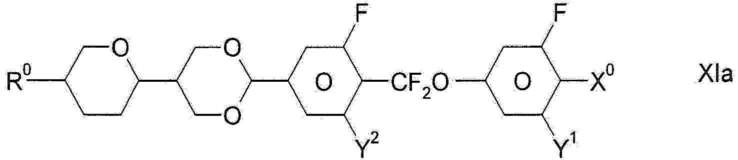 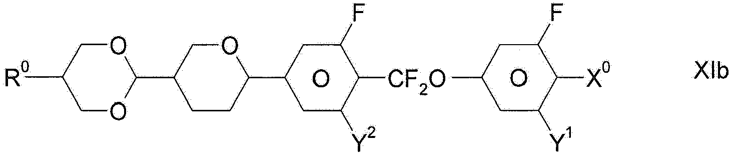 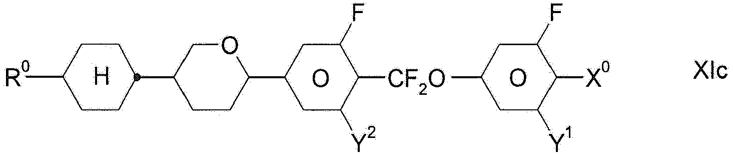 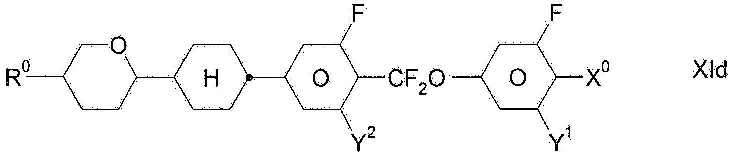 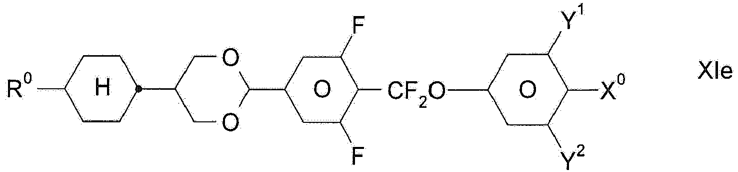 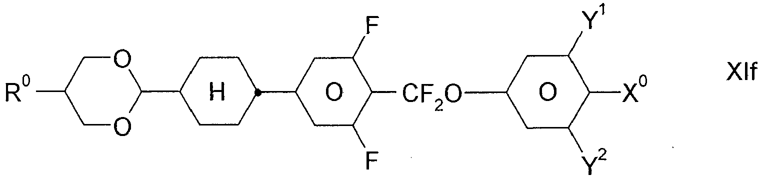 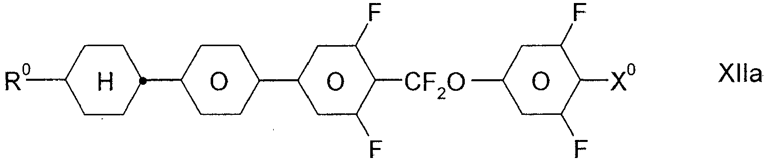 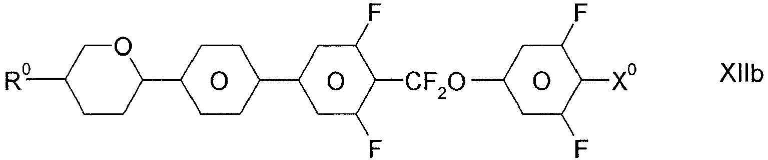 worin R⁰ und X⁰ die oben angegebenen Bedeutungen haben. Vorzugsweise bedeutet R⁰ Alkyl mit 1 bis 8 C-Atomen und X⁰ F. Besonders bevorzugte Verbindungen sind solche, worin Y¹ F und Y² H oder F, vorzugsweise F, bedeuten;
- FK-Medium, welches zusätzlich eine oder mehrere Verbindungen der folgenden Formel enthält: 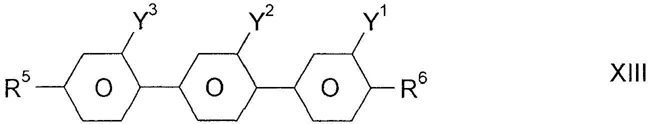 worin R⁵ und R⁶ jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 8 C-Atomen bedeuten. Y¹⁻³ bedeutet unabhängig voneinander H oder F. Vorzugsweise bedeuten ein oder zwei der Gruppen aus Y¹⁻³ F. Bevorzugte Verbindungen der Formel XIII sind solche ausgewählt aus der Gruppe bestehend aus den folgenden Formeln: 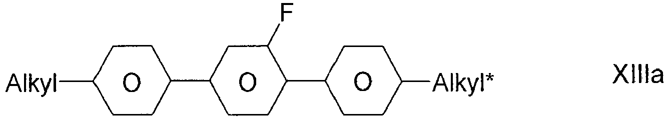 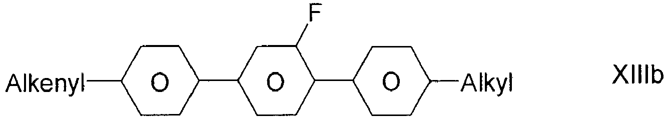 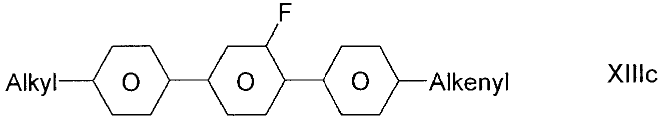 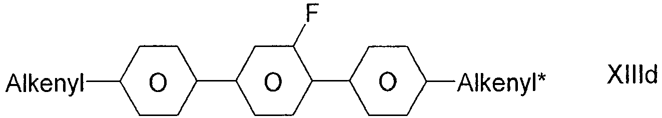 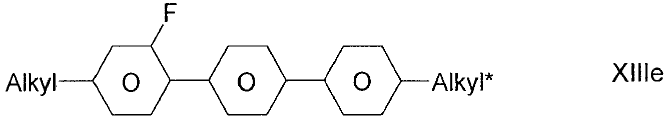 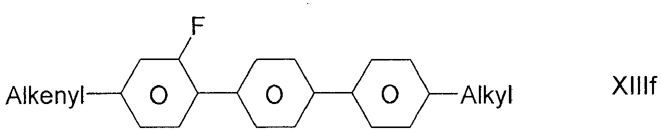 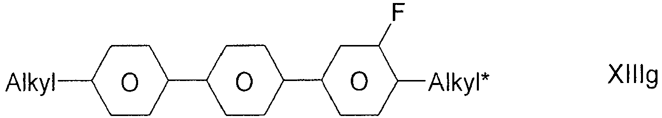 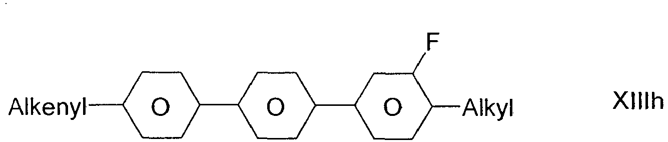 worin
   - Alkyl und Alkyl*: jeweils unabhängig voneinander einen geradkettigen Alkylrest mit 1 bis 6 C-Atomen, und
   - Alkenyl und Alkenyl*: jeweils unabhängig voneinander einen geradkettigen Alkenylrest mit 2 bis 6 C-Atomen
   bedeuten. Ganz besonders bevorzugt sind Verbindungen der folgenden Formel 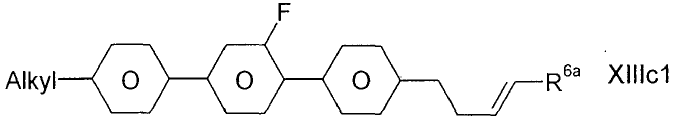 worin Alkyl die oben angegebene Bedeutung hat und R^{6a} H oder CH₃ bedeutet.
- FK-Medium, welches zusätzlich eine oder mehrere Verbindungen ausgewählt aus der Gruppe bestehend aus den folgenden Formeln enthält: 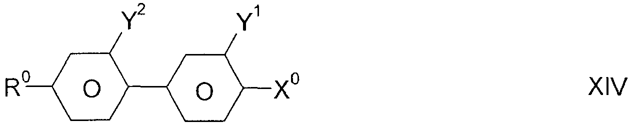 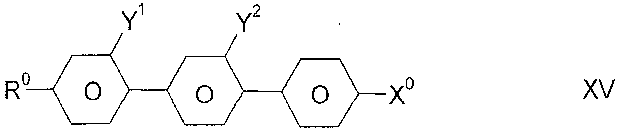 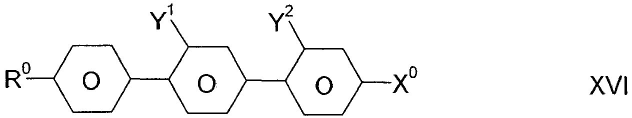 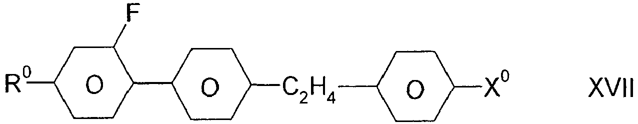 worin R⁰, X⁰, Y¹ und Y² die oben angegebenen Bedeutungen haben. Vorzugsweise bedeutet R⁰ Alkyl mit 1 bis 8 C-Atomen und X⁰ F oder Cl;
   Die Verbindungen der Formeln XIV bis XVI sind vorzugsweise ausgewählt aus der Gruppe bestehend aus den folgenden Formeln: 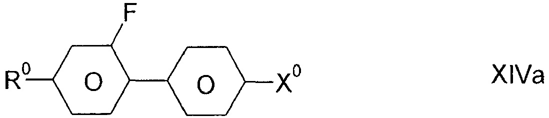 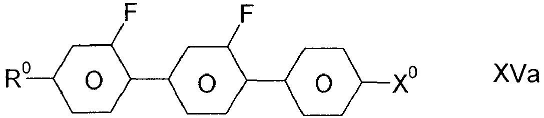 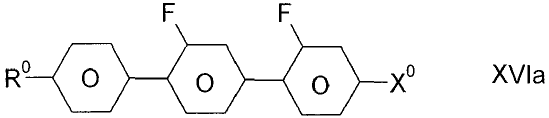 worin R⁰ und X⁰ die oben angegebenen Bedeutungen haben. Vorzugsweise bedeutet R⁰ Alkyl mit 1 bis 8 C-Atomen und X⁰ vorzugsweise F oder Cl.
- FK-Medium, welches zusätzlich eine oder mehrere Verbindungen der Formel D1 und/oder D2 enthält: 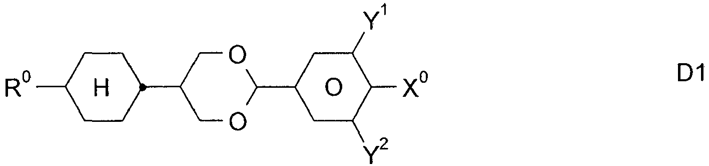 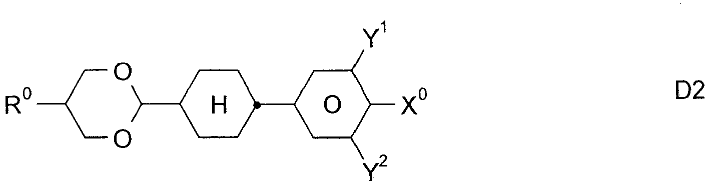 worin Y¹, Y², R⁰ und X⁰ die oben angegebene Bedeutung besitzen. Vorzugsweise bedeutet R⁰ Alkyl mit 1 bis 8 C-Atomen und X⁰ F. Besonders bevorzugt sind Verbindungen der folgenden Formeln: 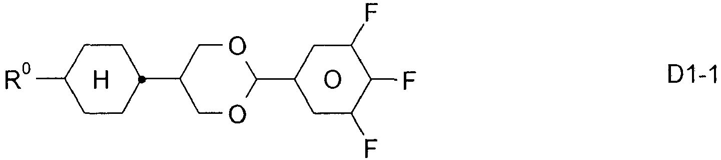 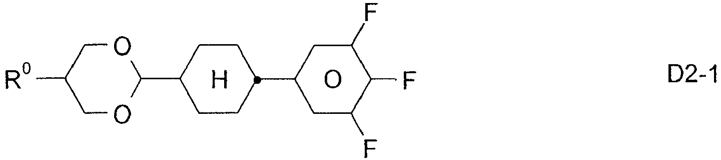 worin R⁰ die oben angegebenen Bedeutungen hat und vorzugsweise geradkettiges Alkyl mit 1 bis 6 C-Atomen, insbesondere C₂H₅, n-C₃H₇ oder n-C₅H₁₁ bedeutet.
- FK-Medium, welches zusätzlich eine oder mehrere Verbindungen der folgenden Formel enthält: 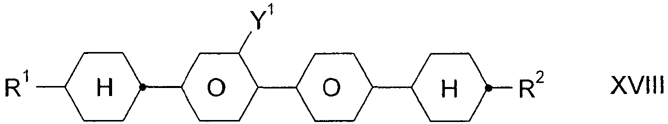 worin Y¹, R¹ und R² die oben angegebene Bedeutung besitzen. R¹ und R² bedeuten vorzugsweise jeweils unabhängig voneinander Alkyl mit 1 bis 8 C-Atomen;
- FK-Medium, welches zusätzlich eine oder mehrere Verbindungen der folgenden Formel enthält: 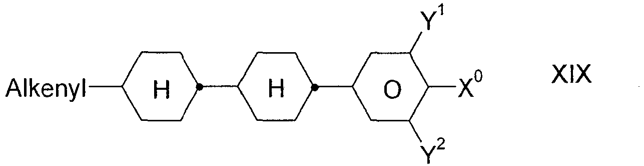 worin X⁰, Y¹ und Y² die oben angegebenen Bedeutungen besitzen und "Alkenyl" C₂₋₇-Alkenyl bedeutet. Besonders bevorzugt sind Verbindungen der folgenden Formel, 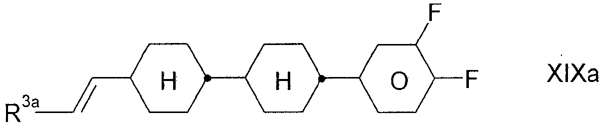 worin R^{3a} die oben angegebene Bedeutung hat und vorzugsweise H bedeutet;
- FK-Medium, welches zusätzlich eine oder mehrere Vierkern-Verbindungen ausgewählt aus der Gruppe bestehend aus den Formeln XX bis XXVI enthält: 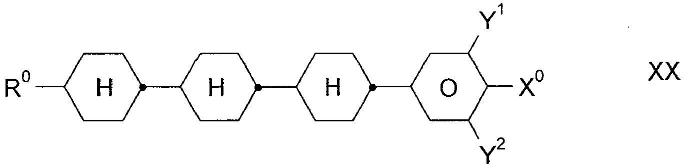 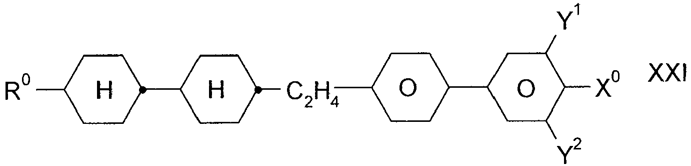 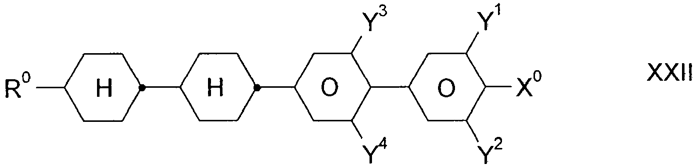 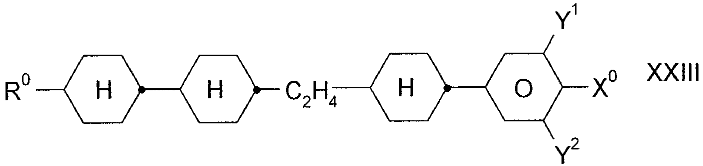 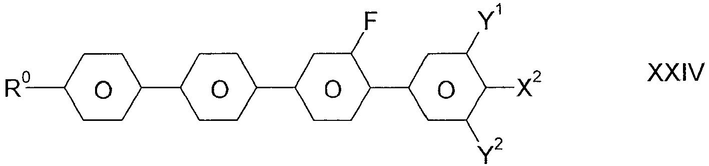 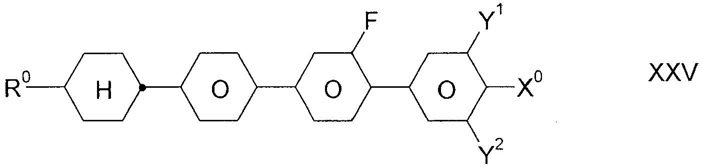 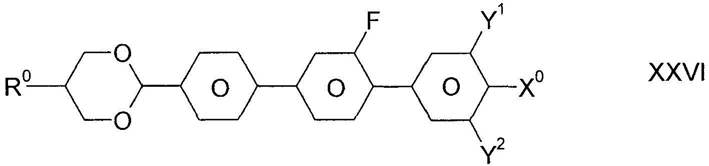 worin Y¹⁻⁴, R⁰ und X⁰ jeweils unabhängig voneinander eine der oben angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- FK-Medium, welches zusätzlich eine oder mehrere Verbindungen der folgenden Formel enthält: 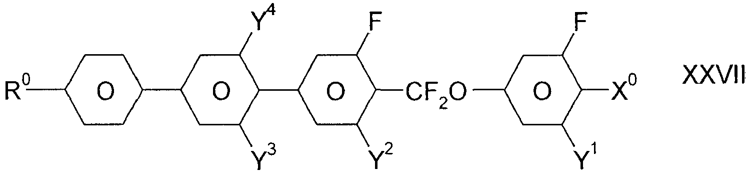 worin R⁰, X⁰ und Y¹⁻⁴ die oben angegebenen Bedeutungen besitzen. Besonders bevorzugt sind Verbindungen der folgenden Formel: 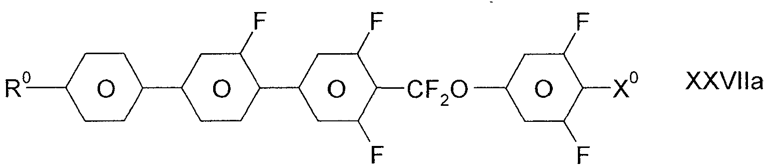
- FK-Medium, welches zusätzlich eine oder mehrere Verbindungen der folgenden Formel enthält: 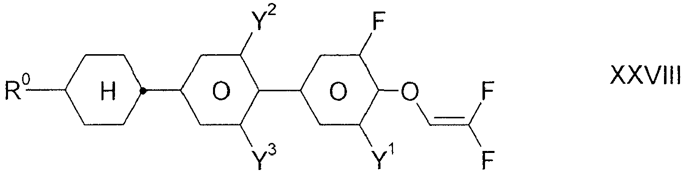 worin R⁰ und Y¹⁻³ die oben angegebenen Bedeutungen besitzen. Besonders bevorzugt sind Verbindungen der folgenden Formeln: 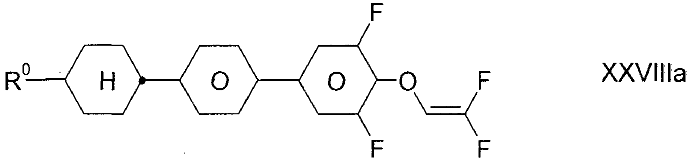 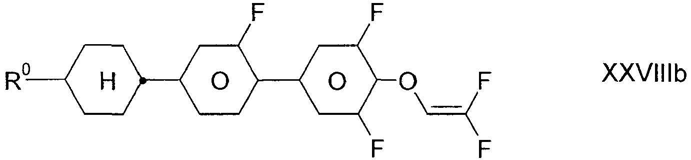 worin R⁰ die oben angegebene Bedeutung besitzt und vorzugsweise Alkyl, Alkoxy, Oxaalkyl, Fluoralkyl oder Alkenyl mit jeweils bis zu 8 C-Atomen bedeutet.
- FK-Medium, welches zusätzlich eine oder mehrere Verbindungen der folgenden Formel enthält: 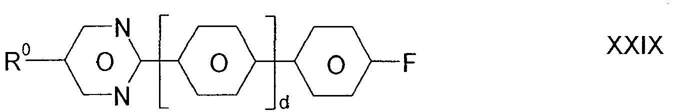 worin R⁰ die oben angegebene Bedeutung besitzt und vorzugsweise geradkettiges Alkyl mit 2-5 C-Atomen ist, und d 0 oder 1, vorzugsweise 1 bedeutet. Bevorzugte Mischungen enthalten 3 - 30 Gew.%, insbesondere 5-20 Gew.% dieser Verbindung(en).
- FK-Medium, welches zusätzlich eine oder mehrere Verbindungen der folgenden Formel enthält: 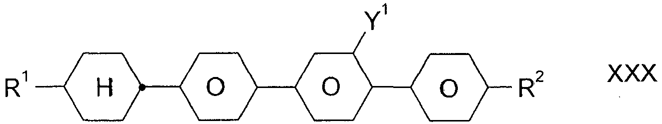 worin Y¹, R¹ und R² die oben angegebene Bedeutung besitzen. R¹ und R² bedeuten vorzugsweise jeweils unabhängig voneinander Alkyl mit 1 bis 8 C-Atomen. Y¹ bedeutet vorzugsweise F. Bevorzugte Mischungen enthalten 1-15 Gew.%, insbesondere 1-10 Gew.% dieser Verbindungen.
- 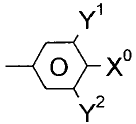 ist vorzugsweise 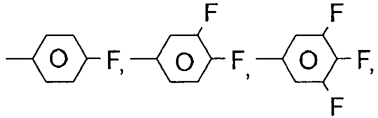 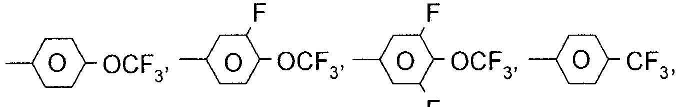 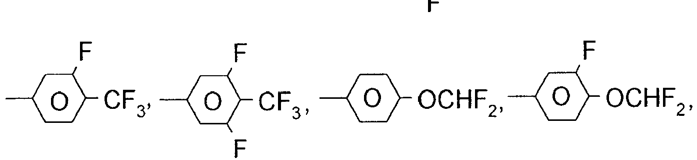 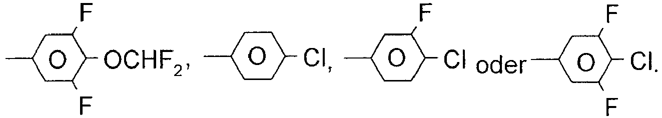
- R⁰ ist vorzugsweise geradkettiges Alkyl oder Alkenyl mit 2 bis 7 C-Atomen;
- X⁰ ist vorzugsweise F, ferner OCF₃, Cl oder CF₃;
- Das Medium enthält vorzugsweise eine, zwei oder drei Verbindungen der Formel I;
- Das Medium enthält vorzugsweise eine Verbindung der Formel II;
- Das Medium enthält vorzugsweise eine oder mehrere Verbindungen ausgewählt aus der Gruppe der Verbindungen der Formeln III, IV, VII-2, VIII-1, XII, XIII, XIV, XV, XXV, XXVI, XXVII, XXVIII und XXX.
- Das Medium enthält vorzugsweise jeweils eine oder mehrere Verbindungen der Formel VII-2, XII und XXVII;
- Das Medium enthält vorzugsweise 1-25 Gew.%, bevorzugt 3-20 Gew.% an Verbindungen der Formel I;
- Das Medium enthält 50 ppm bis 2000 ppm und ganz besonders bevorzugt 100 bis 1000 ppm an Verbindungen der Formel II;
- Der Anteil an Verbindungen der Formeln III-XXX im Gesamtgemisch beträgt vorzugsweise 75 bis 99 Gew.%;
- Das Medium enthält vorzugsweise 25-80 Gew.%, besonders bevorzugt 30-70 Gew.% an Verbindungen der Formel III und/oder IV;
- Das Medium enthält vorzugsweise 20-70 Gew.%, besonders bevorzugt 25-60 Gew.% an Verbindungen der Formel lila, insbesondere worin R^{3a} H bedeutet;
- Das Medium enthält vorzugsweise 2-25 Gew.%, besonders bevorzugt 3-15 Gew.% an Verbindungen der Formel VII-2;
- Das Medium enthält 2-25 Gew.%, besonders bevorzugt 3-15 Gew.% an Verbindungen der Formel XII;
- Das Medium enthält vorzugsweise 1-20 Gew.%, besonders bevorzugt 2-15 Gew.% an Verbindungen der Formel XXV;
- Das Medium enthält vorzugsweise 1-25 Gew.%, besonders bevorzugt 2-20 Gew.% an Verbindungen der Formel XXVII;
- Das Medium enthält vorzugsweise 1-35 Gew.%, besonders bevorzugt 5-30 Gew.% an Verbindungen der Formel XXVIII;
- Das Medium enthält vorzugsweise eine oder mehrere Verbindungen ausgewählt aus der Gruppe der Verbindungen der Formeln VII-2, VIII-1b,X und XXVII (CF₂O-verbrückte Verbindungen).

Es wurde gefunden, dass bereits ein relativ geringer Anteil an Verbindungen der Formel II im Gemisch mit üblichen Flüssigkristallmaterialien enthaltend Verbindungen der Formel I, zu einer beträchtlichen Erhöhung der Lichtstabilität führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr geringe Schaltzeiten und sehr gute Werte für die VHR nach UV-Belastung und bei erhöhter Temperatur.
Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich geringere Abnahme des HR unter UV-Belastung aufweisen als analoge Mischungen enthaltend anstelle der Verbindungen der Formel I Cyanophenylcyclohexane der Formel 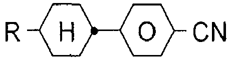 oder Ester der Formel 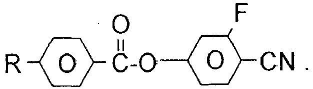 Die LC-Medien sind vorzugsweise zu 99 Gew.-%, besonders bevorzugt zu 100 Gew.-% frei von Benzonitrilderivaten.
Die Lichtstabilität und UV-Stabilität der erfindungsgemäßen Mischungen ist erheblich besser, d.h. sie zeigen eine deutlich kleinere Abnahme des HR unter Licht- bzw. UV-Belastung als unstabilisierte Mischungen. Bereits geringe Konzentrationen der Verbindungen (≤ 1 Gew.%) der Formel II in den Mischungen erhöhen die HR gegenüber Mischungen aus dem Stand der Technik um 10 % und mehr.
Der Ausdruck "Alkyl" bzw. "Alkyl*" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst in dieser Anmeldung geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ worin n und m jeweils unabhängig voneinander 1 bis 6 bedeuten, m kann auch 0 bedeuten. Vorzugsweise ist n = 1 und m 1-6 oder m = 0 und n = 1-3.

Der Ausdruck "halogenierter Alkylrest" umfasst vorzugsweise ein- oder mehrfach fluorierte und/oder chlorierte Reste. Perhalogenierte Reste sind eingeschlossen. Besonders bevorzugt sind fluorierte Alkylreste, insbesondere CF₃, CH₂CF₃, CH₂CHF₂, CHF₂, CH₂F, CHFCF₃ und CF₂CHFCF₃.

Falls in den oben- und untenstehenden Formeln R⁰ einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R⁰ einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Diese Reste können auch ein- oder mehrfach halogeniert sein.

Falls R⁰ einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

In den oben- und untenstehenden Formeln ist X⁰ vorzugsweise F, Cl oder ein ein- oder mehrfach fluorierter Alkyl- oder Alkoxyrest mit 1, 2 oder 3 C-Atomen oder ein ein- oder mehrfach fluorierter Alkenylrest mit 2 oder 3 C-Atomen. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CH₂F, OCFHCF₂CF₃, OCFHCF₂CHF₂, OCH=CF₂, OCF=CF₂, OCF₂CHFCF₃, OCF₂CF₂CF₃, OCF₂CF₂CClF₂, OCClFCF₂CF₃, CF=CF₂, CF=CHF, oder CH=CF₂, ganz besonders bevorzugt F oder OCF₃.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. TN-, VA-, TFT-, OCB-, IPS-, FFS- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit vorzugsweise hohem spezifischem Widerstand, die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und high-Δn-TFT-Anwendungen wie z. B. PDAs, Notebooks, LCD-TV und Monitore geeignet.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 70 °C, vorzugsweise ≥ 75 °C, gleichzeitig Rotationsviskositäten γ₁ von ≤ 100 mPa·s, besonders bevorzugt ≤ 70 mPa·s zu erreichen, wodurch hervorragende MFK-Anzeigen mit schnellen Schaltzeiten erzielt werden können.

Die dielektrische Anisotropie der erfindungsgemäßen Flüssigkristallmischungen Δε ist vorzugsweise ≥ +5, besonders bevorzugt ≥ +9. Die Mischungen sind außerdem durch kleine Operationsspannungen gekennzeichnet. Die Schwellenspannung der erfindungsgemäßen Flüssigkristallmischungen ist vorzugsweise ≤ 1,7 V, insbesondere ≤ 1,6 V.

Die Doppelbrechung Δn der erfindungsgemäßen Flüssigkristallmischungen ist vorzugsweise ≥ 0,09, besonders bevorzugt ≥ 0,10.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von -25 °C bis +70 °C.

Es versteht sich, dass durch geeignete Wahl der Komponenten der erfindungsgemäßen Mischungen auch höhere Klärpunkte (z.B. oberhalb 100 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden.

Die FK-Medien können auch weitere, dem Fachmann bekannte und in der Literatur beschriebene Zusätze, wie z. B. UV-Stabilisatoren wie Tinuvin® der Fa. Ciba, Antioxidantien, Radikalfänger, Nanopartikel, etc. enthalten. Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

Die einzelnen Komponenten der oben genannten bevorzugten Ausführungsformen der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren.

Es versteht sich für den Fachmann von selbst, dass die erfindungsgemäßen FK-Medien auch Verbindungen enthalten können, worin beispielsweise H, N, O, Cl, F durch die entsprechenden Isotope ersetzt sind.

Die Herstellung der erfindungsgemäß verwendbaren Flüssigkristallmischungen erfolgt in an sich üblicher Weise, beispielsweise indem man eine oder mehrere Verbindungen der Formeln I und II mit einer oder mehreren Verbindungen der Formeln III-XXX oder mit weiteren flüssigkristallinen Verbindungen und/oder Additiven mischt. Vorzugsweise erfolgt das Mischen unter Inertgas, beispielsweise unter Stickstoff oder Argon. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |

| Code für R^{1*}, R^{2*}, L^{1*}, L^{2*}, L^{3*} | R^{1*} | R^{2*} | L^{1*} | L^{2*} |
|---|---|---|---|---|
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

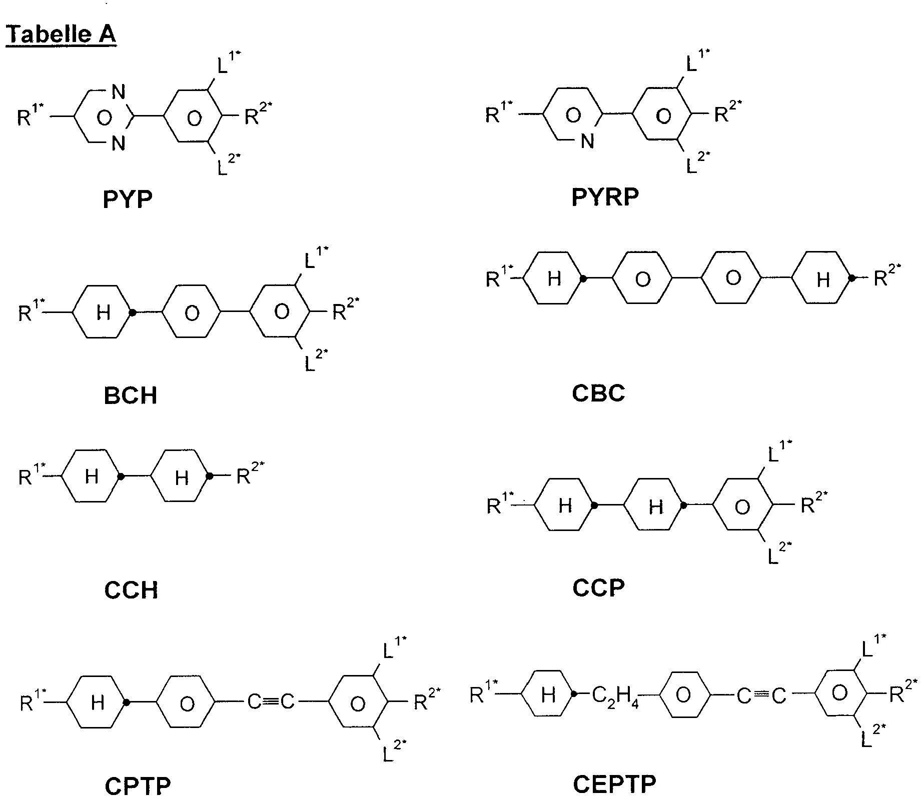

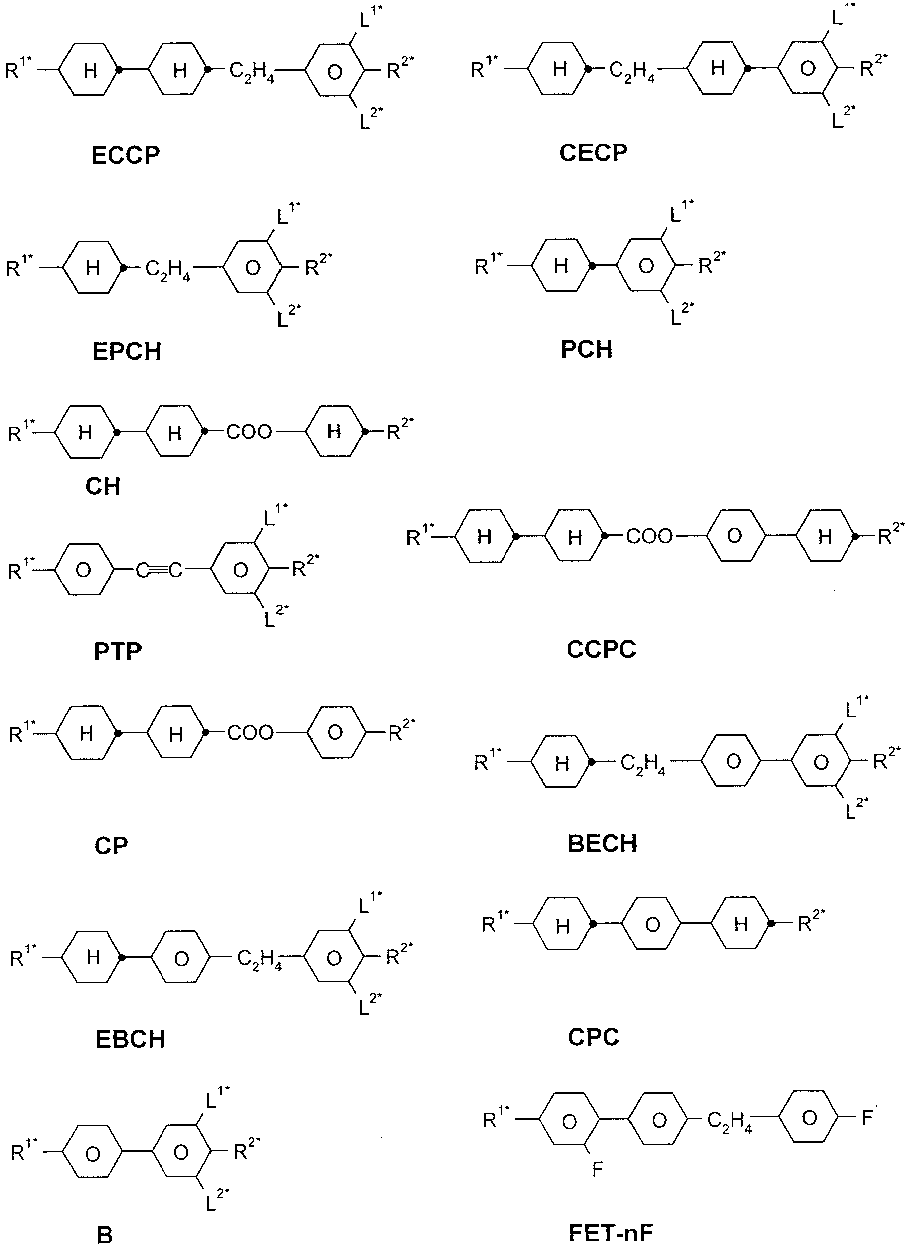

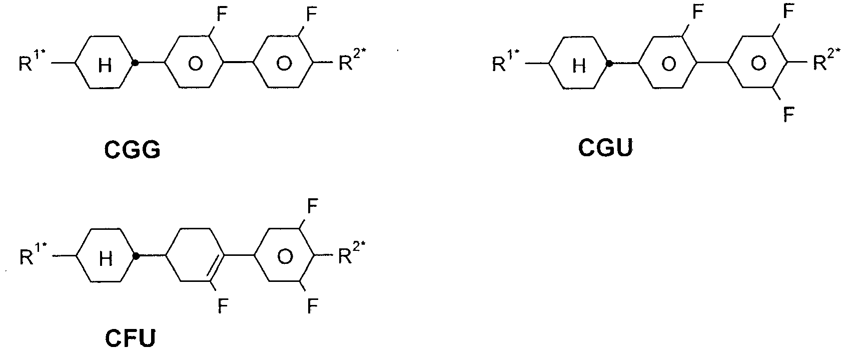

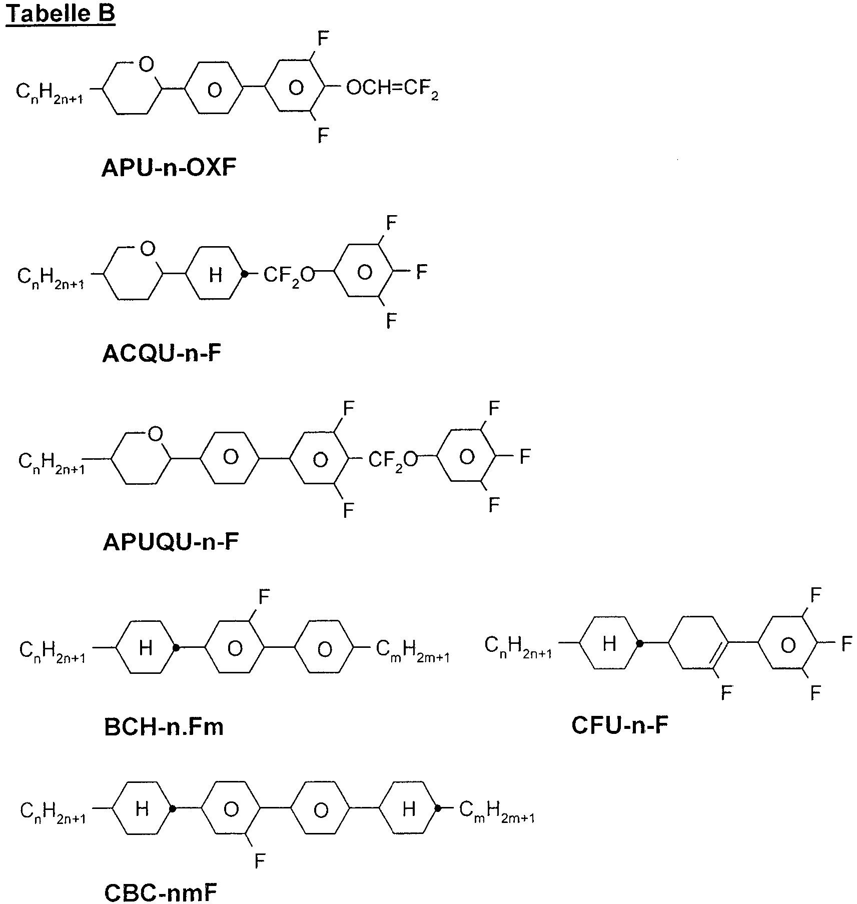

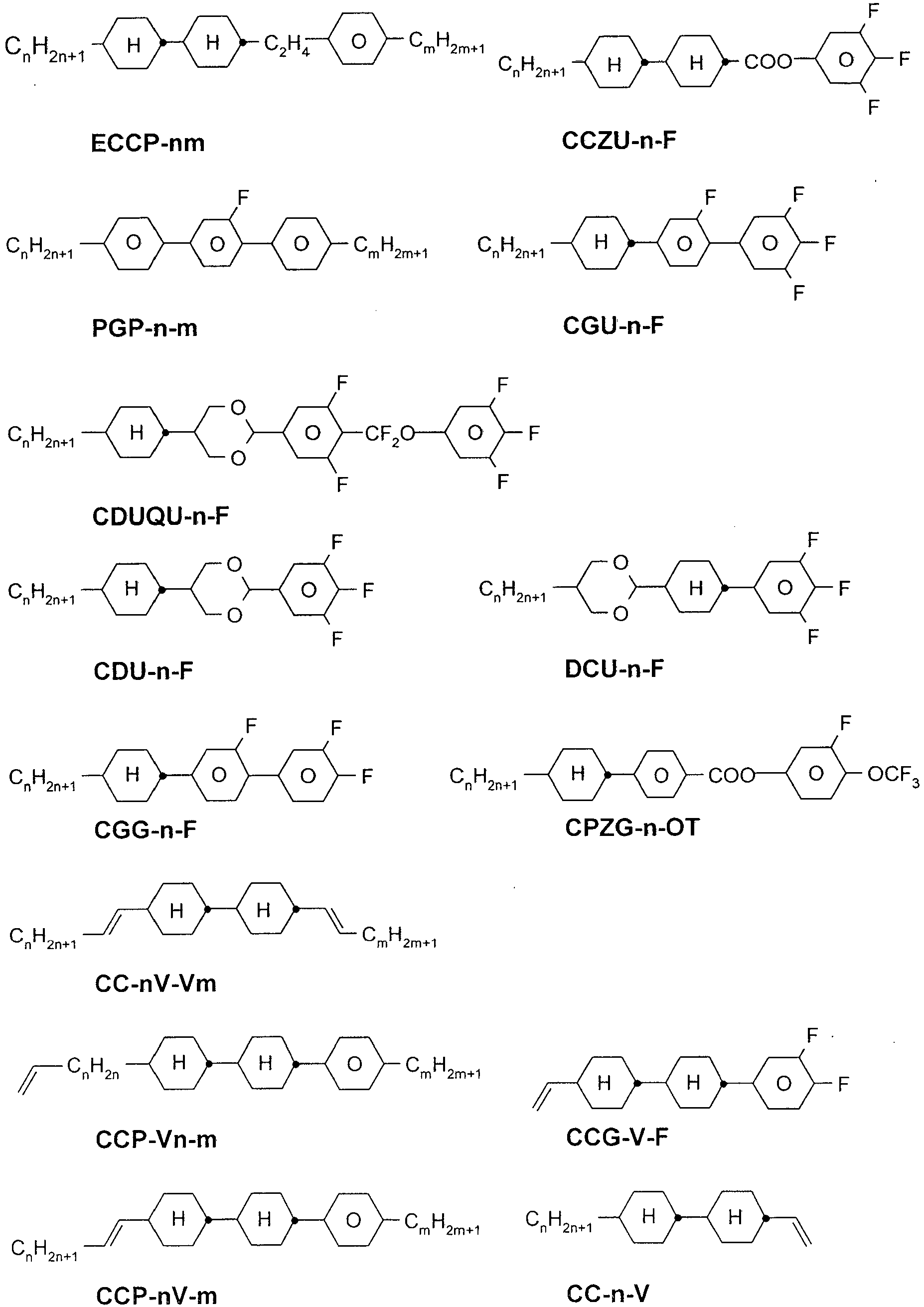

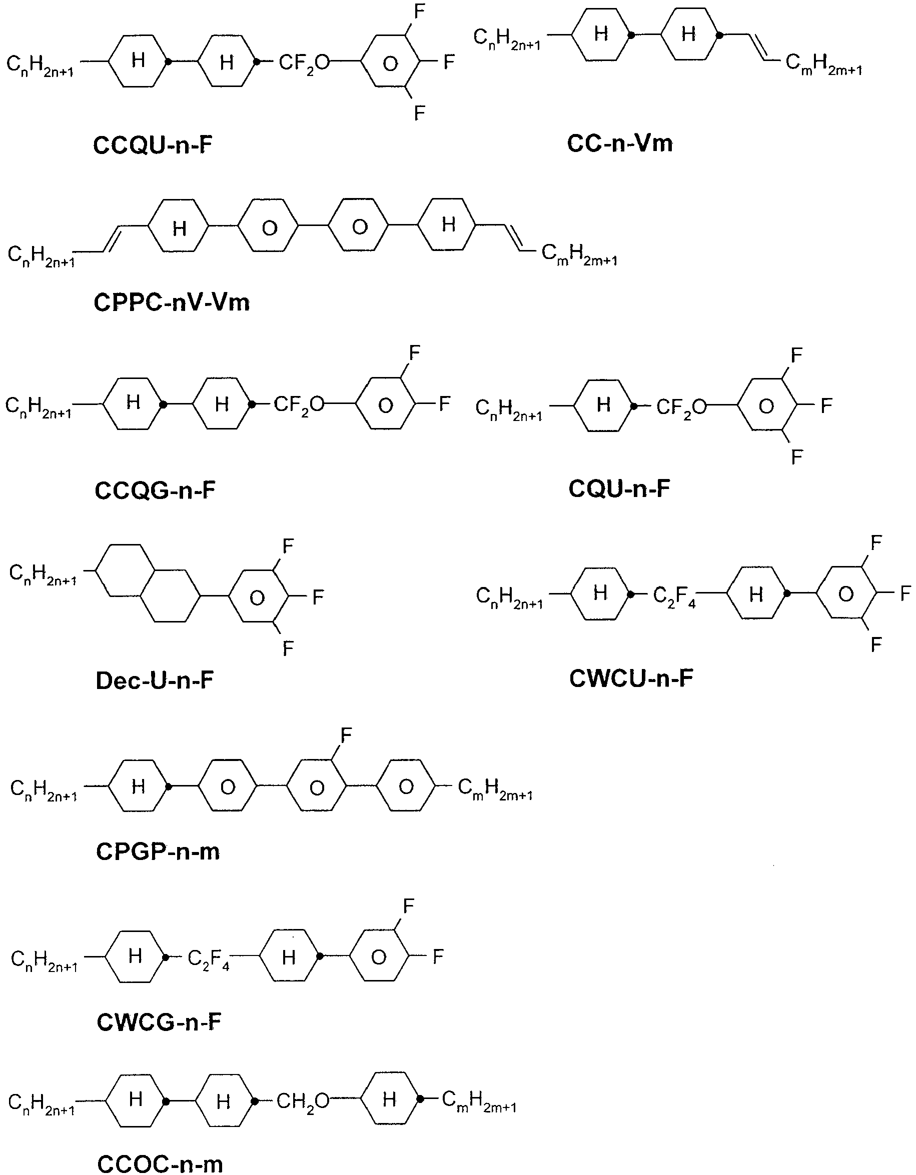

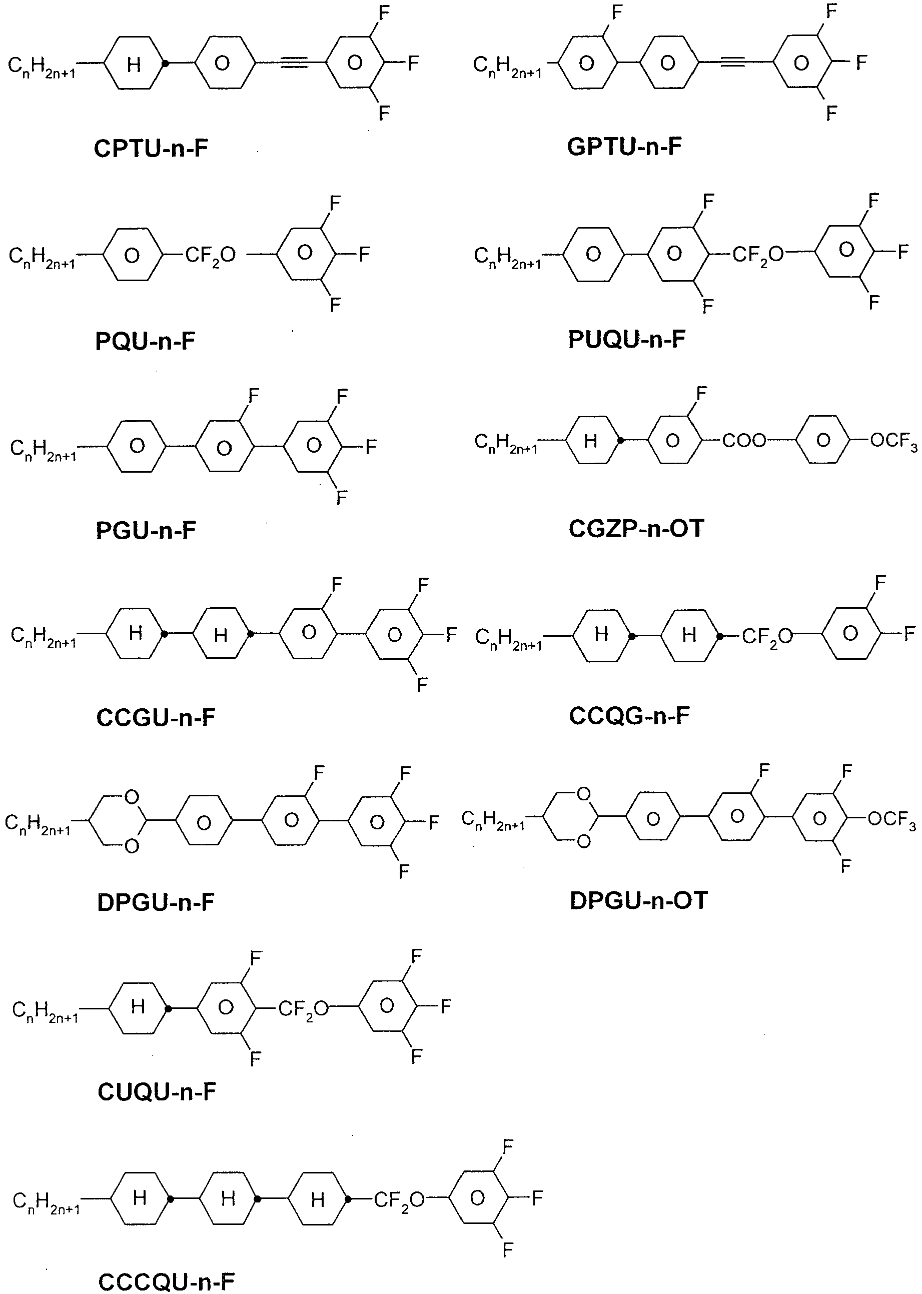

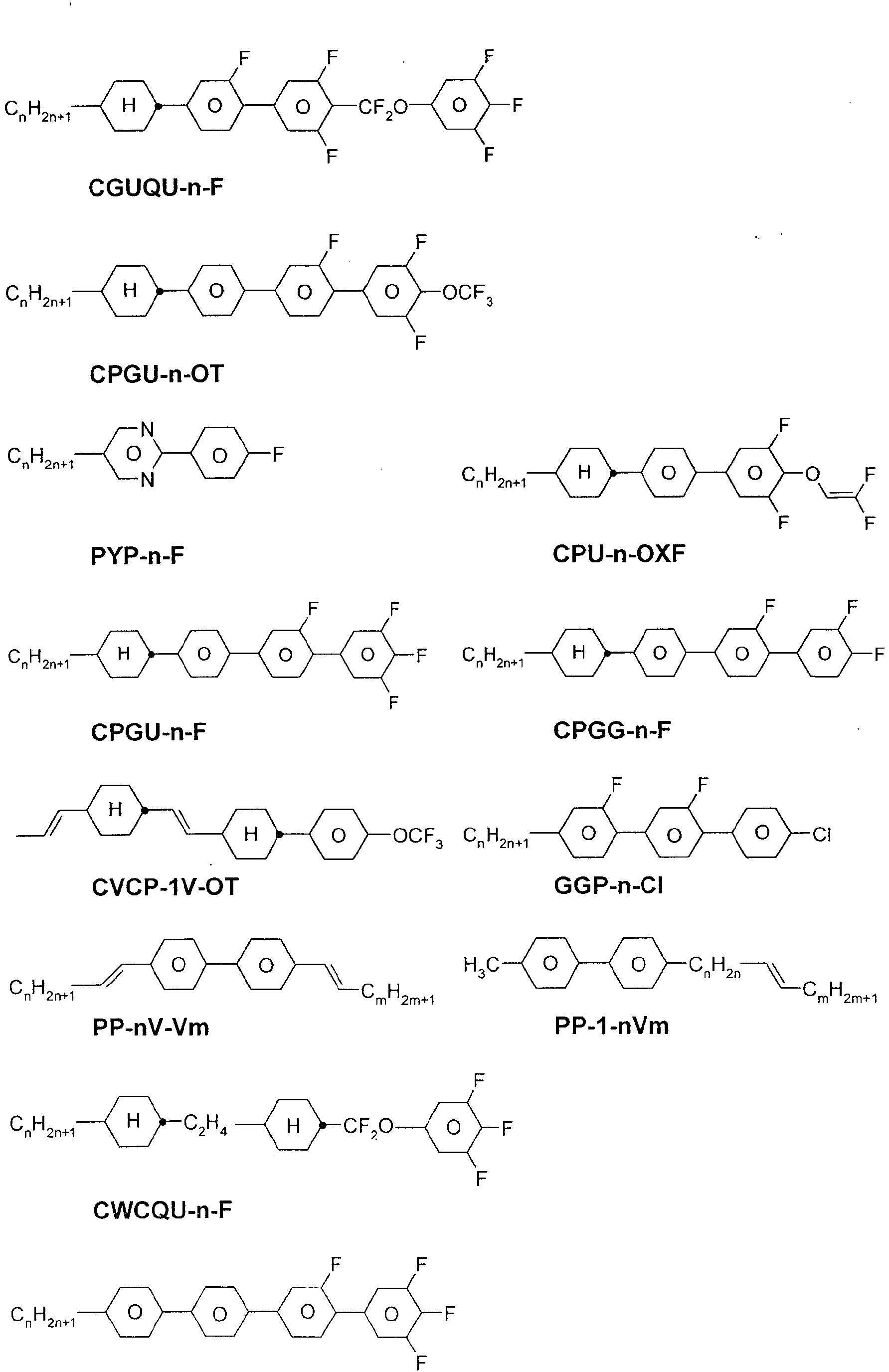

### Mischungsbeispiel 3 (mit Tinuvin770® und TinuvinP® stabilisierte Mischung M1)

Eine erfindungsgemäße nematische FK-Mischung wird wie folgt formuliert

| | | | |
|---|---|---|---|
| Mischung M1 | 99,699 % | HR₁₀₀ (1 h UV) | 74 % |
| TinuvinP® | 0,30 % | | |
| Tinuvin770® | 100 ppm | | |

Gegenüber Mischungsbeispiel 1 lässt sich die HR₁₀₀ durch zusätzliche Verwendung von TinuvinP® weiter verbessern, allerdings ist diese Kombination trotz der insgesamt deutlich höheren Konzentration an Stabilisator weniger effektiv als bei der Verwendung von 1000 ppm Tinuvin770® allein (Mischungsbeispiel 2).

### Thiophenhaltige Grundmischung M2

Eine nematische FK-Mischung wird wie folgt formuliert

| | | | |
|---|---|---|---|
| PUQU-3-F | 5,0 % | Kp. | + 74,5 °C |
| PGUQU-3-F | 7,0 % | γ₁ | 55 mPa·s |
| APUQU-2-F | 8,0 % | Δn | 0,1026 |
| APUQU-3-F | 8,0 % | Δε | +7,6 |
| CC-3-V | 47,0 % | HR₁₀₀ (1 h UV) | 51 % |
| CC-3-V1 | 7,0 % | | |
| CCP-V-1 | 11,0 % | | |
| PUS-2-2 | 7,0 % | | |

### Vergleichsbeispiel V1 (mit Tinuvin770 ® stabilisierte Mischung M2)

Eine nematische FK-Mischung wird wie folgt formuliert

| | | | |
|---|---|---|---|
| Mischung M2 | 99,99 % | HR₁₀₀ (1 h UV) | 79 % |
| Tinuvin770® | 1000 ppm | | |

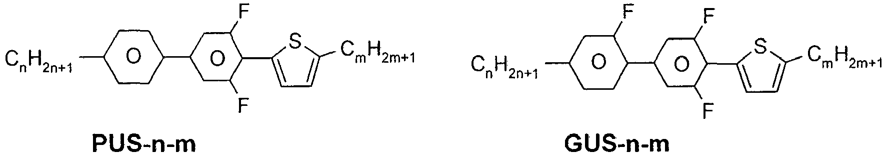

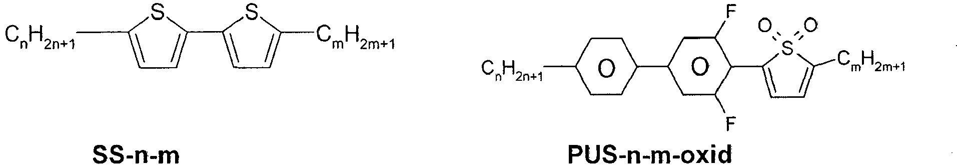

In einer bevorzugten Ausführungsform der vorliegenden Erfindung enthalten die erfindungsgemäßen FK-Medien eine oder mehrere Verbindungen ausgewählt aus der Gruppe bestehend aus Verbindungen der Tabelle A und B.

**Tabelle C**

| | |
|---|---|
| In der Tabelle C werden mögliche Dotierstoffe angegeben, die den erfindungsgemäßen FK-Medien zugesetzt werden können. | |
| 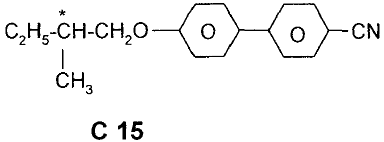 | 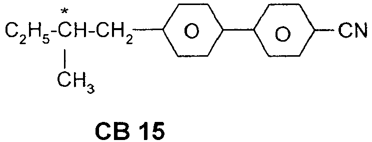 |
| 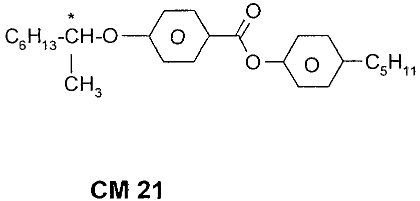 | 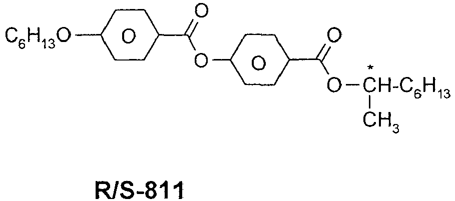 |
| 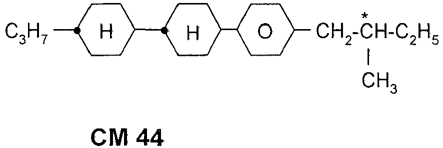 | 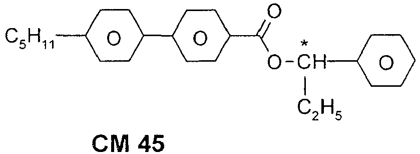 |
| 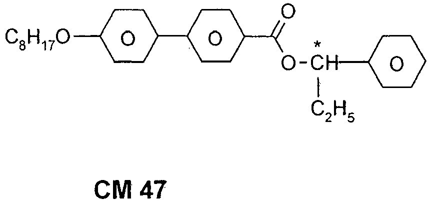 | 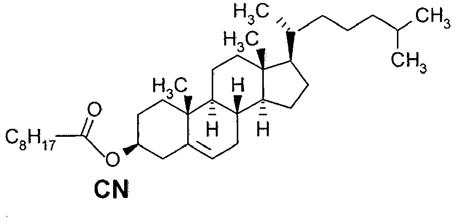 |
| 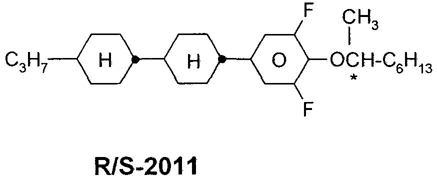 | 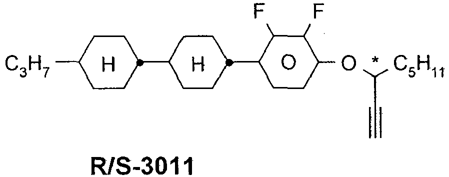 |
| 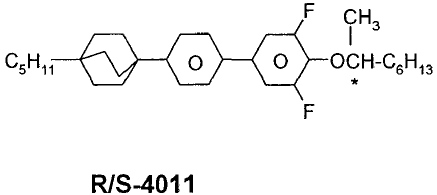 | 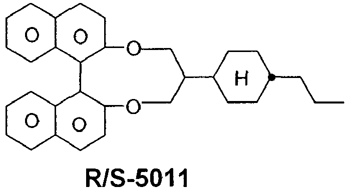 |
| 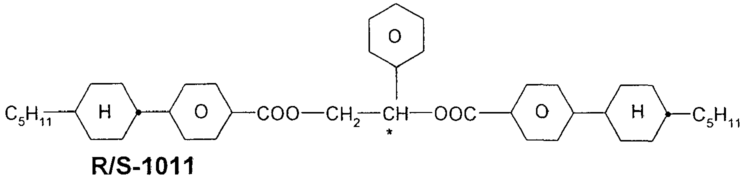 | |

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Gruppe bestehend aus Verbindungen der Tabelle C.

**Tabelle D**

| | |
|---|---|
| In der Tabelle D werden weitere mögliche Stabilisatoren angegeben, die den erfindungsgemäßen FK-Medien neben den Verbindungen der Formel II zugesetzt werden können. (n bedeutet hier eine ganze Zahl von 1 bis 12) | |
| 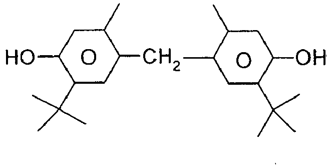 | 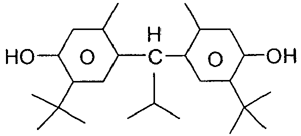 |
| 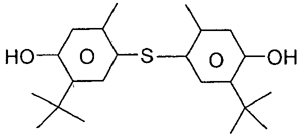 | 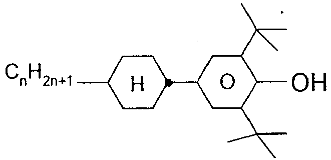 |
| 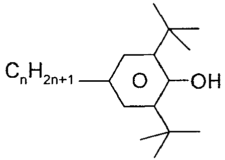 | 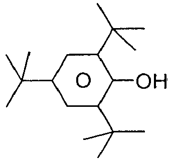 |
| 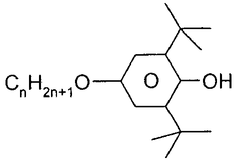 | 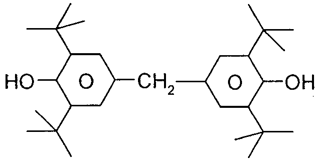 |
| 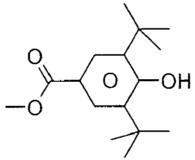 | 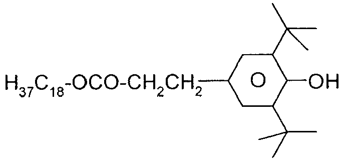 |
| 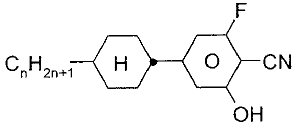 | 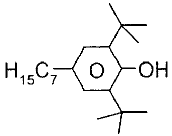 |
| 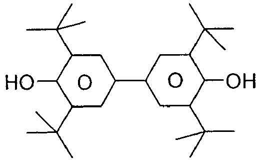 | 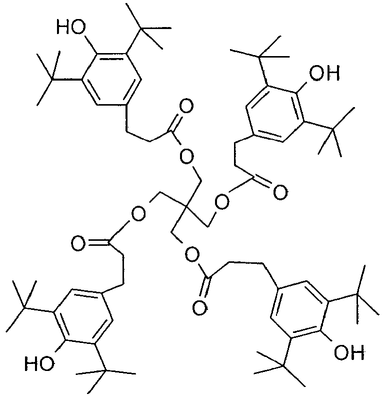 |
| 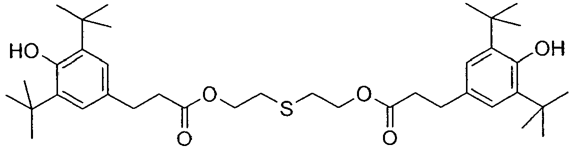 | |
| 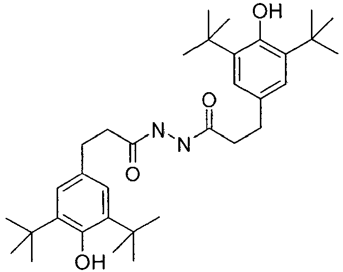 | 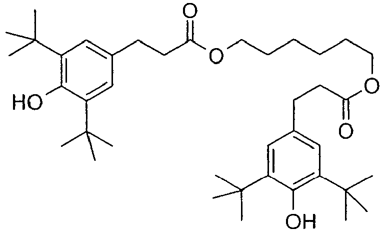 |
| 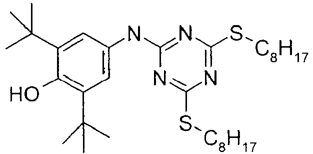 | 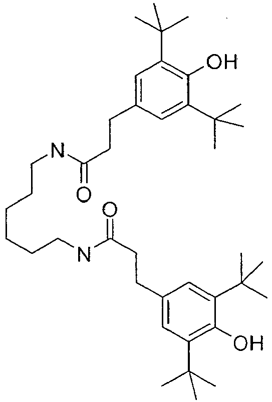 |
| 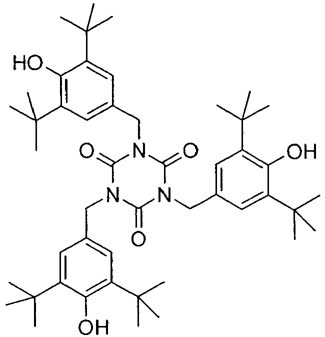 | 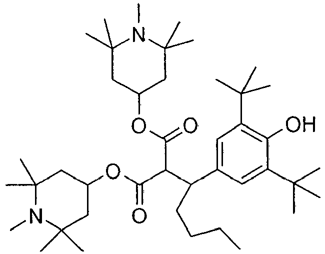 |
| 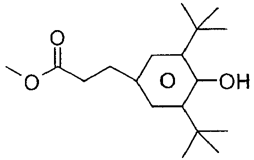 | 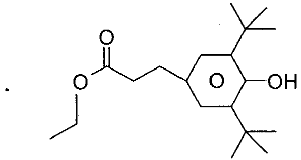 |
| 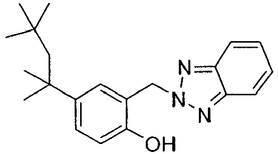 | 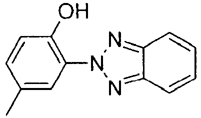 |
| 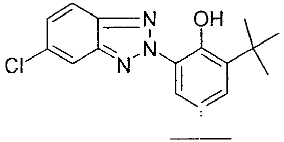 | 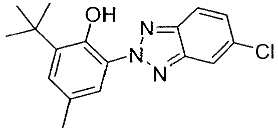 |
| 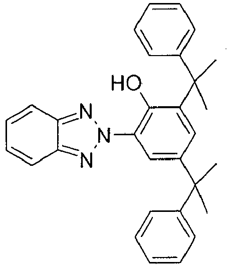 | 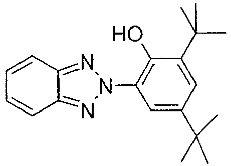 |
| 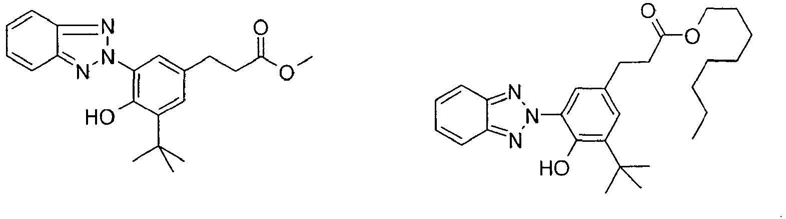 | |
| 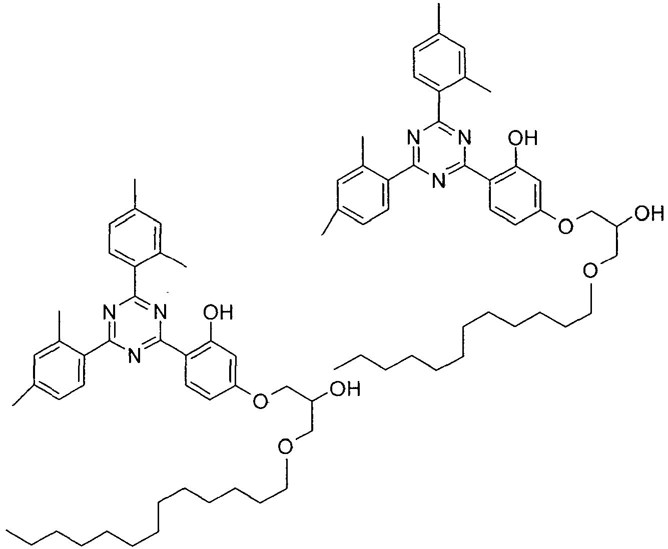 | |

Vorzugsweise enthalten die FK-Medien 0 bis 10 Gew.%, insbesondere 0,01 bis 5 Gew.% und besonders bevorzugt 0,1 bis 3 Gew.% an Stabilisatoren. Vorzugsweise enthalten die FK-Medien einen oder mehrere Stabilisatoren ausgewählt aus der Gruppe bestehend aus Verbindungen der Tabelle D.

Außerdem werden folgende Abkürzungen und Symbole verwendet:
- Vₒ: Schwellenspannung, kapazitiv [V] bei 20°C,
- V₁₀: optische Schwelle für 10 % relativen Kontrast [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Suszeptibilität senkrecht zum Direktor bei 20°C und 1 kHz,
- ε_{∥}: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- tₒₙ: Einschaltzeit [Transmissionsänderung von 10 % auf 90 %) bei 20 °C und definierter Operationsspannung,
- t_{off}: Ausschaltzeit [Transmissionsänderung von 90 % auf 10 %) bei 20 °C,
- RT: Reaktionszeit (tₒₙ + t_{off})
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen in Gewichtsprozent angegeben und beziehen sich auf die entsprechende Gesamtmischung ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Darmstadt, Deutschland bestimmt und gelten für eine Temperatur von 20°C und Δn wird bei 589 nm und Δε bei 1 kHz bestimmt, sofern nicht jeweils explizit anders angegeben.

Die flüssigkristallinen Eigenschaften der Einzelverbindungen werden, soweit nicht anders angegeben, in der nematischen Wirtsmischung ZLI-4792 (kommerziell erhältlich von Merck KGaA, Darmstadt) bei einer Konzentration von 10% bestimmt.

"Raumtemperatur" bedeutet 20°C, falls nicht anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazitiven Schwellenspannung Vₒ sowie für V₁₀ verwendeten Testzellen sind aufgebaut aus Substraten bestehend aus Natriumglas (Sodalime Glas), die mit Polyimidorientierungsschichten (Durimid® 32 mit Verdünner (70 % NMP + 30 % Xylol) im Verhältnis 1:4) der Firma Arch Chemicals beschichtet sind, welche antiparallel zueinander gerieben sind und einen Oberflächentilt von quasi 0 Grad aufweisen. Die Fläche der durchsichtigen, nahezu quadratischen Elektroden aus ITO, beträgt 1 cm². Zur Bestimmung der kapazitiven Schwellenspannung wird ein handelsübliches hochauflösendes LCR-Meter (z.B. LCR-Meter 4284A der Firma Hewlett Packard) eingesetzt.

### Beispiele

### Thiophenhaltige Grundmischung M1

Eine nematische FK-Mischung wird wie folgt formuliert

| | | | |
|---|---|---|---|
| APUQU-2-F | 12,0 % | Kp. | + 80 °C |
| APUQU-3-F | 12,0 % | γ₁ | 71 mPa s |
| CC-3-V | 36,0% | Δn | 0,111 |
| CC-3-V1 | 4,0 % | Δε | +10,6 |
| CCP-V-1 | 12,0 % | HR₁₀₀ (1 h UV) | 44 % |
| CCQU-3-F | 6,0 % | | |
| PUQU-3-F | 9,0 % | | |
| PUS-3-2 | 9,0 % | | |

### Mischunasbeispiel 1 (mit Tinuvin770® stabilisierte Mischung M1)

Eine erfindungsgemäße nematische FK-Mischung wird wie folgt formuliert

| | | | |
|---|---|---|---|
| Mischung M1 | 99,999 % | HR₁₀₀ (1 h UV) | 64 % |
| Tinuvin770® | 100 ppm | | |

Durch Zugabe von 100 ppm Tinuvin770® verbessert sich die HR₁₀₀ nach UV-Belastung deutlich gegenüber der unstabilisierten Mischung M1.

### Mischungsbeispiel 2 (mit Tinuvin770® stabilisierte Mischung M1)

Eine erfindungsgemäße nematische FK-Mischung wird wie folgt formuliert

| | | | |
|---|---|---|---|
| Mischung M1 | 99,99 % | HR₁₀₀ (1 h UV) | 83 % |
| Tinuvin770® | 1000 ppm | | |

Durch Zugabe von 1000 ppm Tinuvin770® verbessert sich die HR₁₀₀ nach UV-Belastung deutlich gegenüber Mischungsbeispiel 1 mit 100 ppm Stabilisator und ganz erheblich gegenüber der unstabilisierten Mischung M1.

### Mischungsbeispiel 3 (mit Tinuvin770® und TinuvinP® stabilisierte Mischung M1)

Eine erfindungsgemäße nematische FK-Mischung wird wie folgt formuliert

| | | | |
|---|---|---|---|
| Mischung M1 | 99,699 % | HR₁₀₀ (1 h UV) | 74 % |
| TinuvinP® | 0,30 % | | |
| Tinuvin770® | 100 ppm | | |

Gegenüber Mischungsbeispiel 1 lässt sich die HR₁₀₀ durch zusätzliche Verwendung von TinuvinP® weiter verbessern, allerdings ist diese Kombination trotz der insgesamt deutlich höheren Konzentration an Stabilisator weniger effektiv als bei der Verwendung von 1000 ppm Tinuvin770® allein (Mischungsbeispiel 2).

### Thiophenhaltige Grundmischunq M2

Eine nematische FK-Mischung wird wie folgt formuliert

| | | | |
|---|---|---|---|
| PUQU-3-F | 5,0 % | Kp. | + 74,5 °C |
| PGUQU-3-F | 7,0 % | γ₁ | 55 mPa·s |
| APUQU-2-F | 8,0 % | Δn | 0,1026 |
| APUQU-3-F | 8,0 % | Δε | +7,6 |
| CC-3-V | 47,0 % | HR₁₀₀ (1 h UV) | 51 % |
| CC-3-V1 | 7,0 % | | |
| CCP-V-1 | 11,0 % | | |
| PUS-2-2 | 7,0 % | | |

### Mischungsbeispiel 4 (mit Tinuvin770 ® stabilisierte Mischung M2)

Eine erfindungsgemäße nematische FK-Mischung wird wie folgt formuliert

| | | | |
|---|---|---|---|
| Mischung M2 | 99,99 % | HR₁₀₀ (1 h UV) | 79 % |
| Tinuvin 770® | 1000 ppm | | |

### Thiophenhaltige Grundmischunq M3

Eine nematische FK-Mischung wird wie folgt formuliert

| | | | |
|---|---|---|---|
| PUQU-3-F | 9,0 % | Kp. | + 74,0 °C |
| CPGU-3-OT | 9,0 % | γ₁ | 61 mPa s |
| PUQU-2-F | 14,0 % | Δn | 0,132 |
| CC-3-V | 43,5 % | Δε | +7,9 |
| CCP-V-1 | 4,5 % | HR₁₀₀ (1 h UV) | 48 % |
| PP-1-2V1 | 3,0 % | | |
| PGP-2-2V | 11,0 % | | |
| PUS-3-2 | 6,0 % | | |

### Vergleichsbeispiel V2 (mit Tinuvin770® stabilisierte Mischung M3)

Eine nematische FK-Mischung wird wie folgt formuliert

| | | | |
|---|---|---|---|
| Mischung M3 | 99,99 % | HR₁₀₀ (1 h UV) | 81 % |
| Tinuvin770® | 1000 ppm | | |

### Thiophenhaltiqe Grundmischunq M4

Eine nematische FK-Mischung wird wie folgt formuliert

| | | | |
|---|---|---|---|
| PUQU-3-F | 8,0 % | Kp. | + 74,0 °C |
| CPGU-3-OT | 5,5 % | γ₁ | 58 mPa·s |
| PUQU-2-F | 15,0% | Δn | 0,132 |
| CC-3-V | 44,0 % | Δε | +7,2 |
| CCP-V-1 | 7,0 % | HR₁₀₀ (1 h UV) | 55 % |
| PGP-2-2V | 3,0 % | | |
| CPGP-4-3 | 1,5 % | | |
| PUS-3-2 | 16,0 % | | |

### Vergleichsbeispiel V3 (mit Tinuvin770 ® stabilisierte Mischung M4)

Eine nematische FK-Mischung wird wie folgt formuliert

| | | | |
|---|---|---|---|
| Mischung M4 | 99,99 % | HR₁₀₀ (1 h UV) | 79 % |
| Tinuvin770® | 1000 ppm | | |

Die Vergleichsbeispiele V1 bis V3 zeigen eine deutliche Verbesserung der HR₁₀₀ gegenüber den unstabilisierten Grundmischungen.

## Patentansprüche

1. FK-Medium, **dadurch gekennzeichnet, dass** es eine oder mehrere Verbindungen der Formel I enthält, 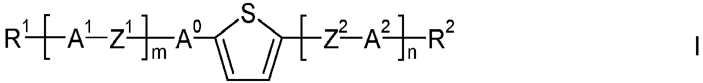 worin die einzelnen Reste folgende Bedeutung besitzen
R¹ und R² H, F, Cl, Br, -CN, -SCN, -NCS, SFs oder geradkettiges oder verzweigtes Alkyl mit 1 bis 12 C-Atomen, worin auch eine oder mehrere nicht benachbarte CH₂-Gruppen jeweils unabhängig voneinander durch -CH=CH-, -C≡C-, -O-, -CO-, -CO-O-, -O-CO-, -O-CO-O- so ersetzt sein können, dass O-Atome nicht direkt miteinander verknüpft sind, und worin auch ein oder mehrere H-Atome durch F, Cl oder Br ersetzt sein können,
A⁰, A¹, A² jeweils unabhängig voneinander Phenylen-1,4-diyl, worin auch eine oder zwei CH-Gruppen durch N ersetzt sein können und ein oder mehrere H-Atome durch Halogen, CN, CH₃, CHF₂, CH₂F, CF₃, OCH₃, OCHF₂ oder OCF₃ ersetzt sein können, Cyclohexan-1,4-diyl, worin auch eine oder zwei nicht benachbarte CH₂-Gruppen unabhängig voneinander durch O und/oder S ersetzt sein können, und ein oder mehrere H-Atome durch F ersetzt sein können, Cyclohexen-1,4-diyl, Bicyclo[1.1.1 ]pentan-1,3-diyl, Bicyclo[2.2.2]octan-1,4-diyl, Spiro[3.3]heptan-2,6-diyl, Tetrahydropyran-2,5-diyl, oder 1,3-Dioxan-2,5-diyl,
Z¹ und Z² jeweils unabhängig voneinander -CF₂O-, -OCF₂-, -CH₂O-, -OCH₂-, -CO-O-, -O-CO-, -C₂H₄- -C₂F₄-, -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C≡C- oder eine Einfachbindung, und
m und n jeweils unabhängig voneinander 0, 1, 2 oder 3,
und
eine oder mehrere Verbindungen ausgewählt aus der Gruppe der Verbindungen der Formel II in einer Gesamtkonzentration von 50 ppm bis 2000 ppm enthält, 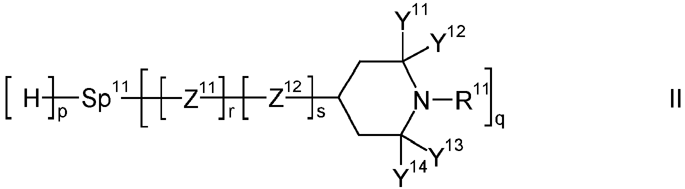 worin
q 1 oder 2,
p (2-q),
Z¹¹ und Z¹² unabhängig voneinander -O-, -(C=O)-, oder eine Einfachbindung, jedoch nicht beide gleichzeitig -O-,
r und s unabhängig voneinander 0 oder 1,
Y¹¹ bis Y¹⁴ jeweils unabhängig voneinander Alkyl mit 1 bis 4 C-Atomen und alternativ auch unabhängig voneinander eines oder beide der Paare (Y¹¹ und Y¹²) und (Y¹³ und Y¹⁴) gemeinsam eine zweibindige Gruppe mit 3 bis 6 C-Atomen,
R¹¹ bei jedem Auftreten unabhängig voneinander H, Alkyl, O-Alkyl, O-Cycloalkyl, O• oder OH,
Sp¹¹ eine geradkettige oder verzweigte Alkylkette mit 2-20 C-Atomen, in der eine -CH₂- -Gruppe oder mehrere -CH₂--Gruppen durch -O- ersetzt sein können, jedoch nicht zwei benachbarte -CH₂- -Gruppen durch -O- ersetzt sein können, einen Kohlenwasserstoffrest, der eine Cycloalkyl- oder eine Alkylcycloalkyleinheit enthält, und, in dem eine -CH₂- -Gruppe oder mehrere -CH₂-Gruppen durch -O- ersetzt sein können, jedoch nicht zwei benachbarte -CH₂- -Gruppen durch -O- ersetzt sein können,
bedeuten und
eine oder mehrere Verbindungen der Formel VIII-1a enthält, 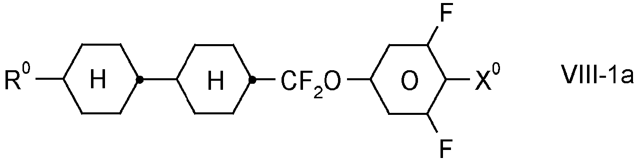 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 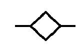 , 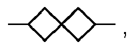 , -O-, -CO-O- oder -O-CO- so ersetzt sein können, dass O-Atome nicht direkt miteinander verknüpft sind, und worin auch ein oder mehrere H-Atome durch Halogen ersetzt sein können,
X⁰ F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
bedeuten, und
eine oder mehrere Verbindungen ausgewählt aus der Gruppe bestehend aus den folgenden Formeln enthält: 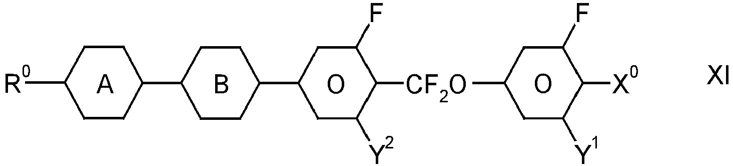 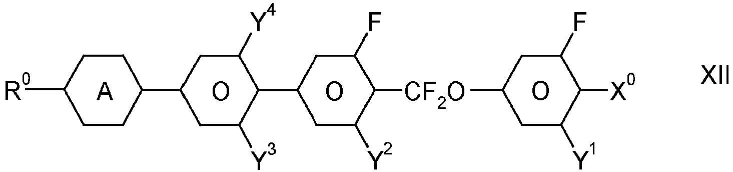 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 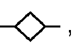 , 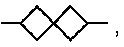 , -O-, -CO-O- oder -O-CO- so ersetzt sein können, dass O-Atome nicht direkt miteinander verknüpft sind, und worin auch ein oder mehrere H-Atome durch Halogen ersetzt sein können,
X⁰ F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
Y¹⁻⁴ jeweils unabhängig voneinander H oder F, und 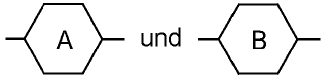
jeweils unabhängig voneinander 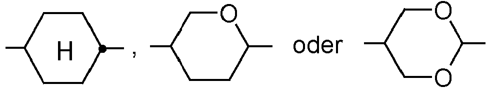 bedeuten,
wobei das Medium eine dielektrische Anisotropie Δε von ≥ +9 aufweist.

2. FK-Medium nach Anspruch 1 **dadurch gekennzeichnet, dass** es eine oder mehrere Verbindungen der Formel I ausgewählt aus der Gruppe der Verbindungen I-1 bis I-16 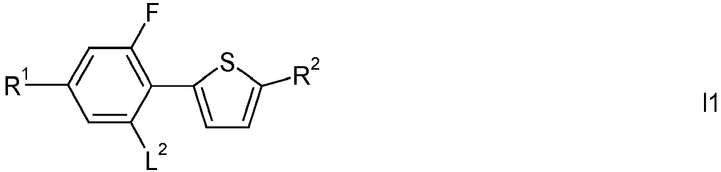 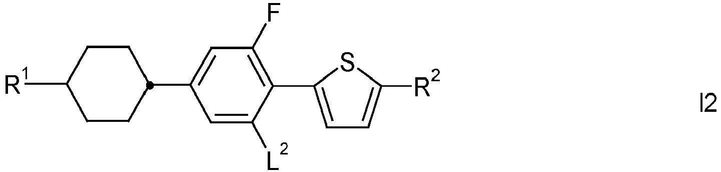 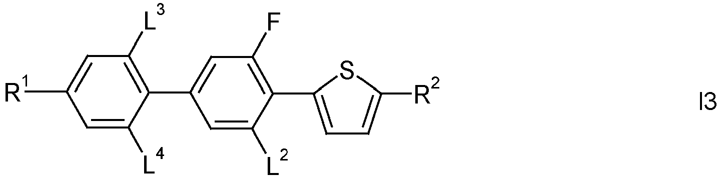 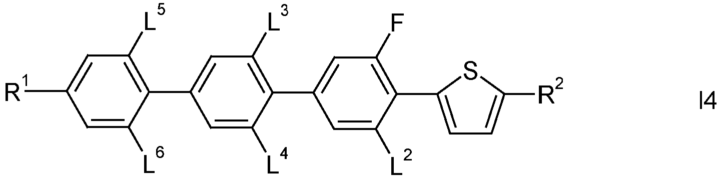 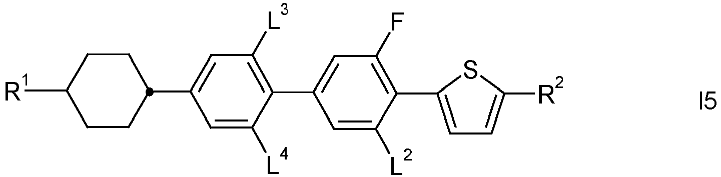 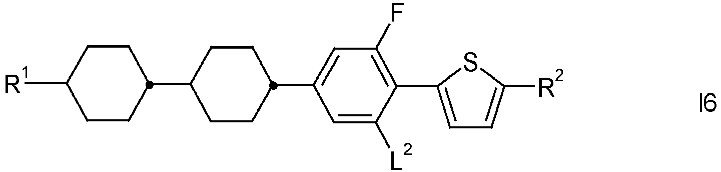 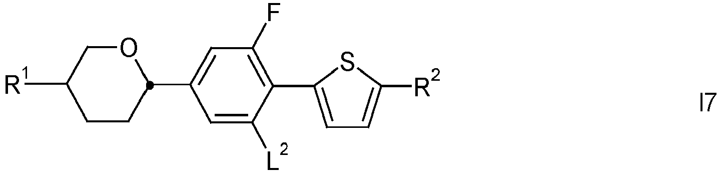 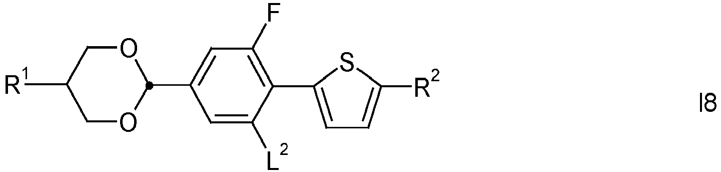 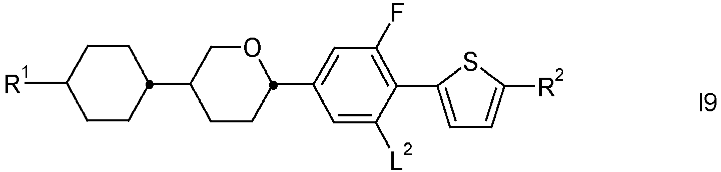 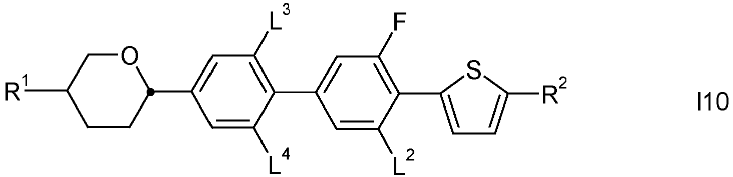 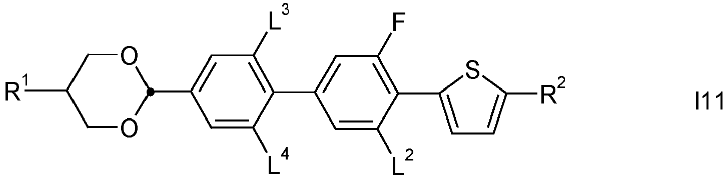 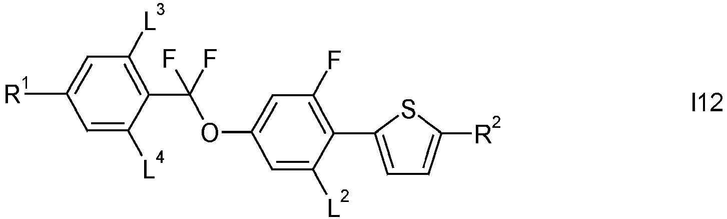 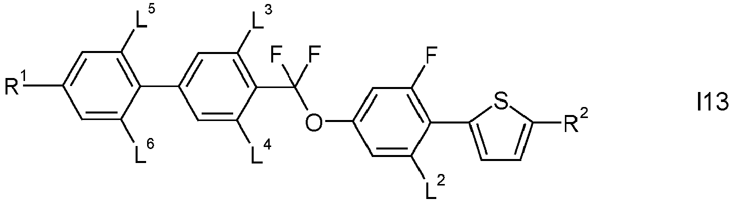 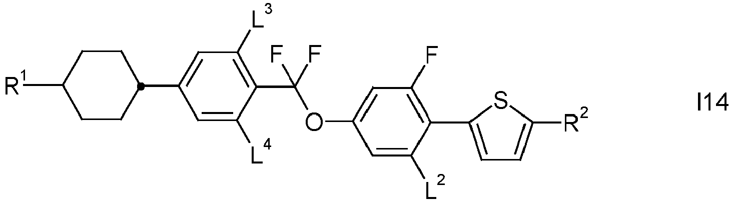 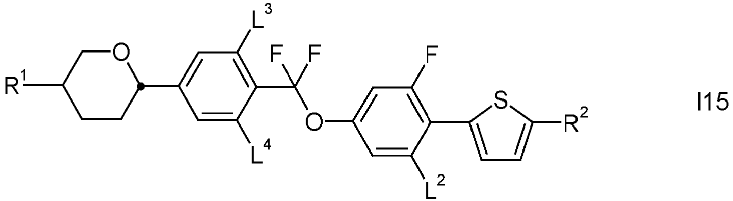 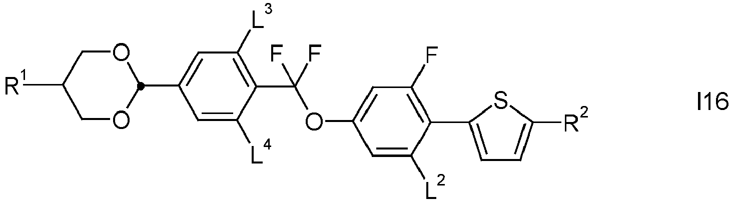 enthält, worin R¹ und R² die in Anspruch 1 angegebenen Bedeutungen haben und L¹ bis L⁶ unabhängig voneinander H oder F bedeuten.

3. FK-Medium nach Anspruch 1 und 2 **dadurch gekennzeichnet, dass** in Formel I m 1, n 0 und A⁰ 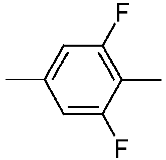 bedeuten.

4. FK-Medium nach einem oder mehreren der Ansprüche 1 bis 3, **dadurch gekennzeichnet, dass** es zusätzliche eine oder mehrere Verbindungen der Formel III und/oder IV enthält: 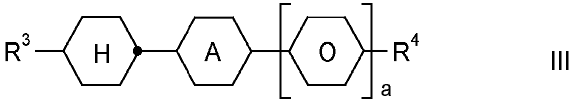 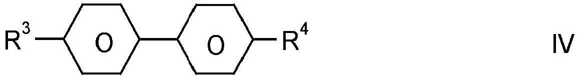 worin
A 1,4-Phenylen oder trans-1,4-Cyclohexylen bedeutet,
a 0 oder 1 ist,
R³ Alkyl oder Alkenyl mit bis zu 9 C-Atomen bedeutet, und
R⁴ Alkyl mit 1 bis 12 C-Atomen, wobei auch eine oder zwei nicht benachbarte CH₂-Gruppen durch -O-, -CH=CH-, -CO-, -OCO-oder -COO- so ersetzt sein können, dass O-Atome nicht direkt miteinander verknüpft sind,
bedeuten.

5. FK-Medium nach einem oder mehreren der Ansprüche 1 bis 4, **dadurch gekennzeichnet, dass** es zusätzlich eine oder mehrere Verbindungen ausgewählt aus der Gruppe bestehend aus folgenden Formeln enthält 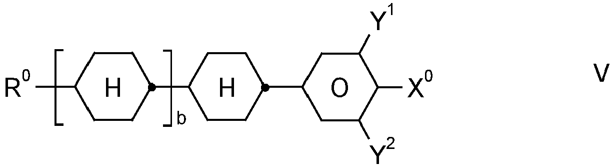 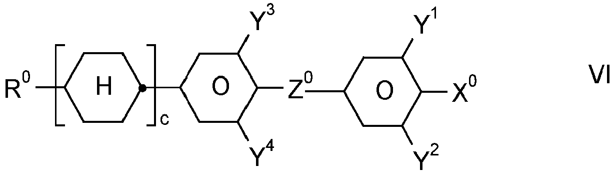 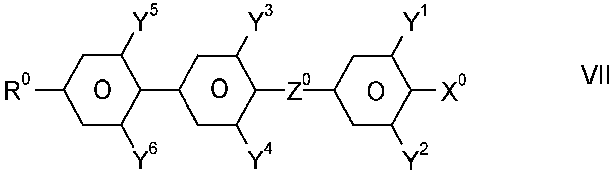 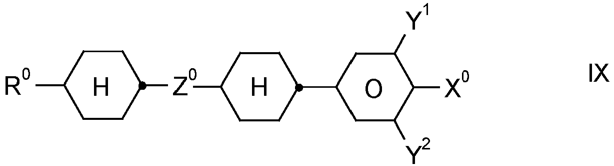 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 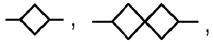 -O-, -CO-O- oder -O-CO- so ersetzt sein können, dass O-Atome nicht direkt miteinander verknüpft sind, und worin auch ein oder mehrere H-Atome durch Halogen ersetzt sein können,
X⁰ F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
Y¹⁻⁶ jeweils unabhängig voneinander H oder F,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
b und c jeweils unabhängig voneinander 0 oder 1
bedeuten.

6. FK-Medium nach einem oder mehreren der Ansprüche 1 bis 5, **dadurch gekennzeichnet, dass** die Verbindungen der Formel II ausgewählt sind aus der Gruppe der Verbindungen der Formeln II1 bis II5

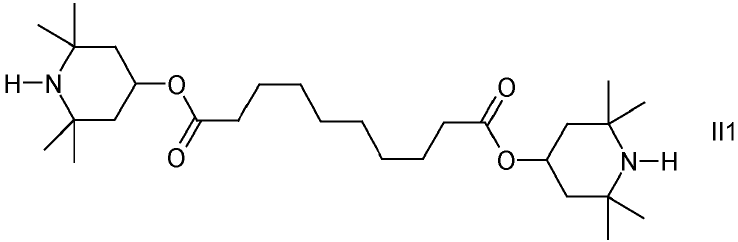

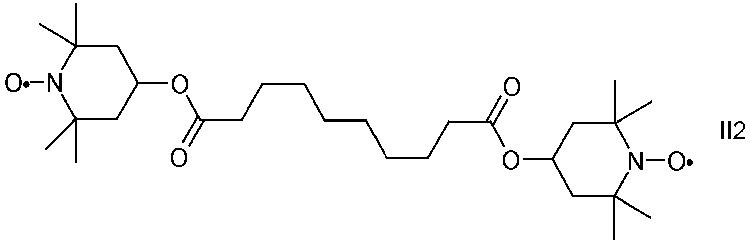

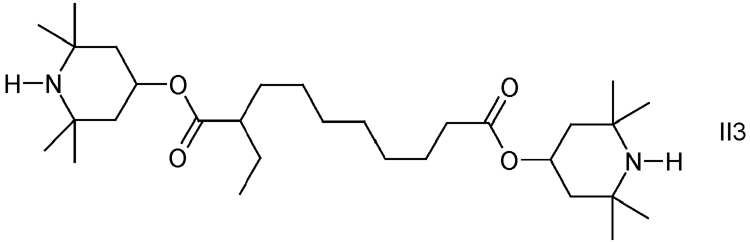

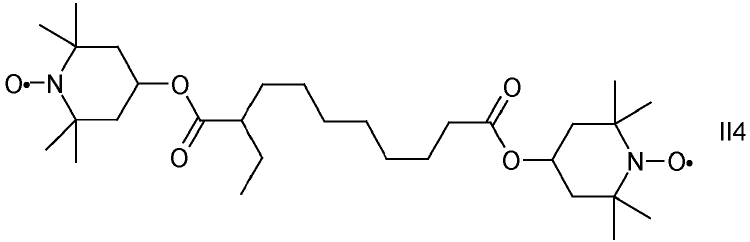

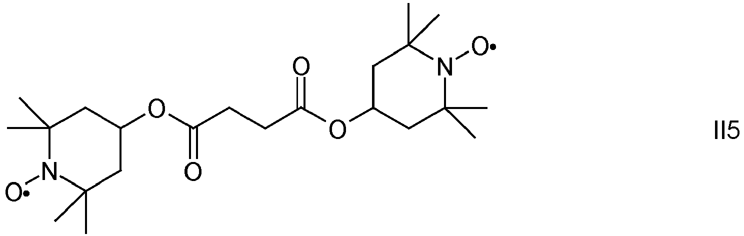

7. FK-Medium nach mindestens einem der Ansprüche 1 bis 6, **dadurch gekennzeichnet, dass** die Gesamtkonzentration der Verbindungen der Formel I im Gesamtmedium 1 % bis 25 % beträgt.

8. Verwendung eines FK-Mediums nach einem oder mehreren der Ansprüche 1 bis 7 für eine elektrooptische Vorrichtung.

9. FK-Anzeige enthaltend ein FK-Medium nach einem oder mehreren der Ansprüche 1 bis 7.

10. Anzeige nach Anspruch 9, **dadurch gekennzeichnet, dass** sie auf dem IPS- oder dem FFS-Effekt basiert.

11. Anzeige nach Anspruch 9 oder 10, **dadurch gekennzeichnet, dass** sie eine Aktivmatrix-Adressierungsvorrichtung aufweist.

12. Verfahren zur Herstellung eines FK-Mediums nach einem oder mehreren der Ansprüche 1 bis 7, **dadurch gekennzeichnet, dass** eine oder mehrere Verbindungen der Formel I mit einer oder mehreren Verbindungen der Formel II und mit einer oder mehreren weiteren mesogenen Verbindungen gemischt wird.

## Claims

1. LC medium, **characterised in that** it comprises one or more compounds of the formula I, 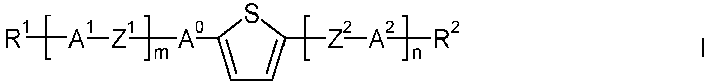 in which the individual radicals have the following meanings:
R¹ and R² denote H, F, Cl, Br, -CN, -SCN, -NCS, SFs or straight-chain or branched alkyl having 1 to 12 C atoms, in which, in addition, one or more non-adjacent CH₂ groups may in each case be replaced, independently of one another, by -CH=CH-, -C≡C-, -O-, -CO-, -CO-O-, -O-CO-, -O-CO-O- in such a way that O atoms are not linked directly to one another, and in which, in addition, one or more H atoms may be replaced by F, Cl or Br,
A⁰, A¹, A² in each case, independently of one another, denote phenylene-1,4-diyl, in which, in addition, one or two CH groups may be replaced by N and one or more H atoms may be replaced by halogen, CN, CH₃, CHF₂, CH₂F, CF₃, OCH₃, OCHF₂ or OCF₃, cyclohexane-1,4-diyl, in which, in addition, one or two non-adjacent CH₂ groups may be replaced, independently of one another, by O and/or S and one or more H atoms may be replaced by F, or denote cyclohexene-1,4-diyl, bicyclo[1.1.1]pen-tane-1,3-diyl, bicyclo[2.2.2]octane-1,4-diyl, spiro[3.3]-heptane-2,6-diyl, tetrahydropyran-2,5-diyl or 1,3-diox-ane-2,5-diyl,
Z¹ and Z² in each case, independently of one another, denote -CF₂O-, -OCF₂-, -CH₂O-, -OCH₂-, -CO-O-, -O-CO-, -C₂H₄-, -C₂F₄-, -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C≡C- or a single bond, and
m and n in each case, independently of one another, denote 0, 1, 2 or 3,
and
one or more compounds selected from the group of the compounds of the formula II in a total concentration of 50 ppm to 2000 ppm, 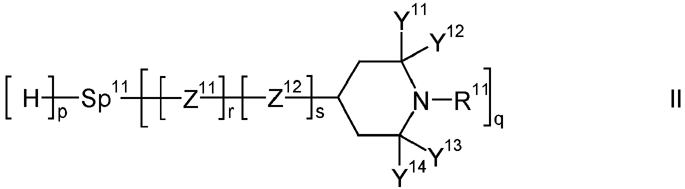 in which
q denotes 1 or 2,
p denotes (2-q),
Z¹¹ and Z¹², independently of one another, denote -O-, -(C=O)- or a single bond, but do not both simultaneously denote -O-,
r and s, independently of one another, denote 0 or 1,
Y¹¹ to Y¹⁴ in each case, independently of one another, denote alkyl having 1 to 4 C atoms and alternatively also, independently of one another, one or both of the pairs (Y¹¹ and Y¹²) and (Y¹³ and Y¹⁴) together denote a divalent group having 3 to 6 C atoms,
R¹¹ on each occurrence, independently of one another, denotes H, alkyl, O-alkyl, O-cycloalkyl, O• or OH,
Sp¹¹ denotes a straight-chain or branched alkyl chain having 2-20 C atoms, in which one -CH₂- group or a plurality of -CH₂- groups may be replaced by -O-, but two adjacent -CH₂- groups cannot be replaced by -O-, or denotes a hydrocarbon radical which contains a cycloalkyl or alkylcycloalkyl unit and in which one -CH₂- group or a plurality of -CH₂- groups may be replaced by -O-, but two adjacent -CH₂- groups cannot be replaced by -O-,
and
one or more compounds of the formula VIII-1a, 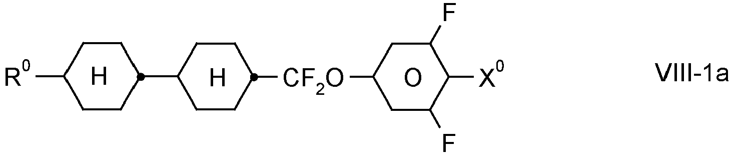 in which
R⁰ denotes an alkyl or alkoxy radical having 1 to 15 C atoms, where, in addition, one or more CH₂ groups in these radicals may in each case be replaced, independently of one another, by -C≡C-, -CF₂O-, -CH=CH-, 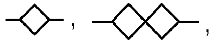 -O-, -CO-O-or -O-CO- in such a way that O atoms are not linked directly to one another, and in which, in addition, one or more H atoms may be replaced by halogen,
X⁰ denotes F, Cl, CN, SF₅, SCN, NCS, a halogenated alkyl radical, halogenated alkenyl radical, halogenated alkoxy radical or halogenated alkenyloxy radical, in each case having up to 6 C atoms,
and one or more compounds selected from the group consisting of the following formulae: 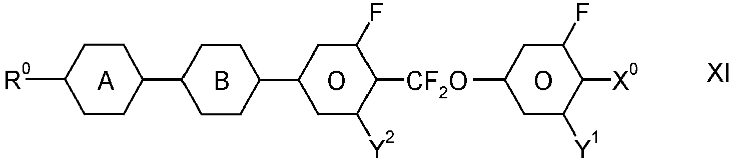 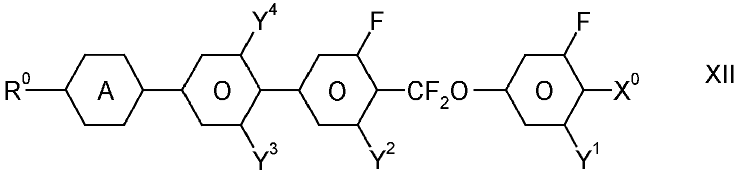 in which
R⁰ denotes an alkyl or alkoxy radical having 1 to 15 C atoms, where, in addition, one or more CH₂ groups in these radicals may in each case be replaced, independently of one another, by -C≡C-, -CF₂O-, -CH=CH-, 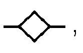 , 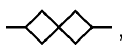 , -O-, -CO-O-or -O-CO- in such a way that O atoms are not linked directly to one another, and in which, in addition, one or more H atoms may be replaced by halogen,
X⁰ denotes F, Cl, CN, SF₅, SCN, NCS, a halogenated alkyl radical, halogenated alkenyl radical, halogenated alkoxy radical or halogenated alkenyloxy radical, in each case having up to 6 C atoms,
Y¹⁻⁴ in each case, independently of one another, denote H or F, and 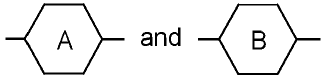
in each case, independently of one another, denote 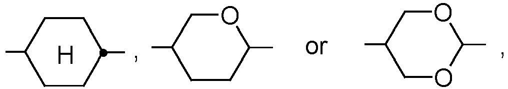 where the medium has a dielectric anisotropy Δε of ≥ +9.

2. LC medium according to Claim 1, **characterised in that** it comprises one or more compounds of the formula I selected from the group of the compounds I1 to 116, 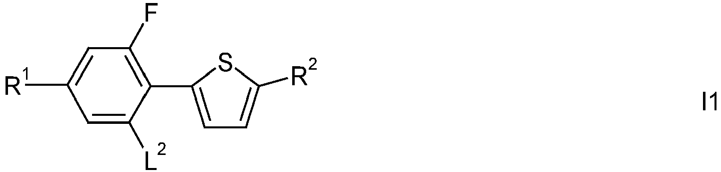 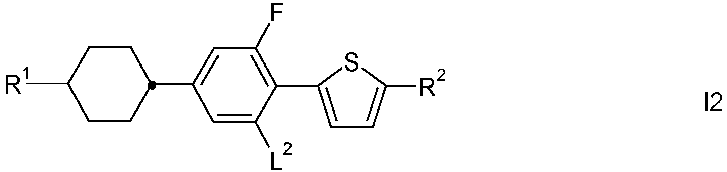 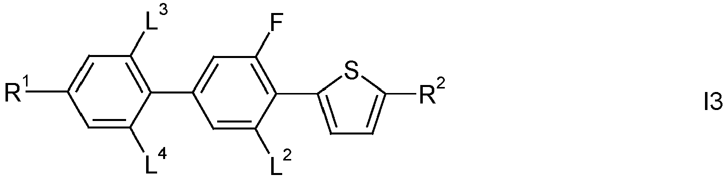 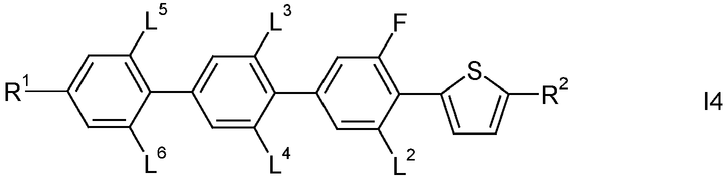 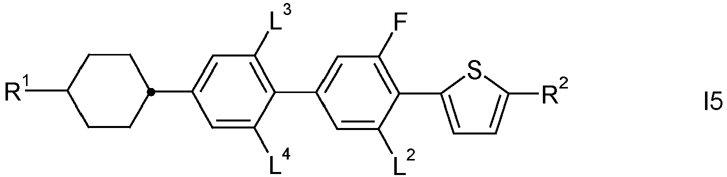 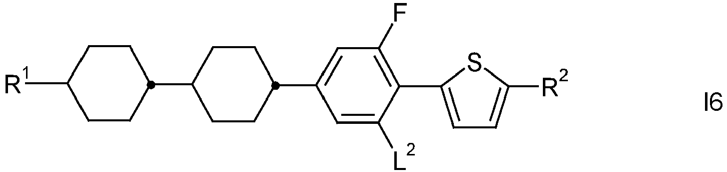 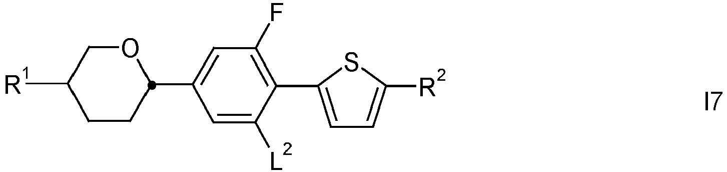 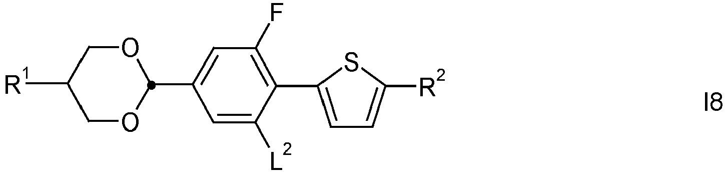 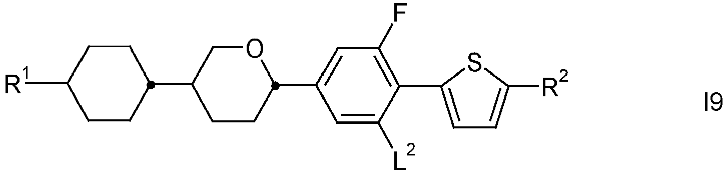 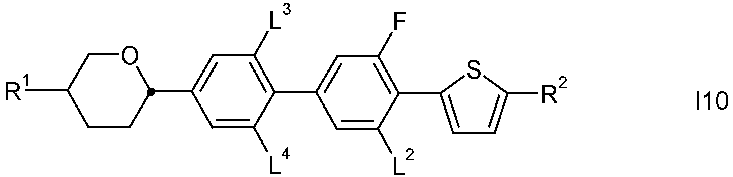 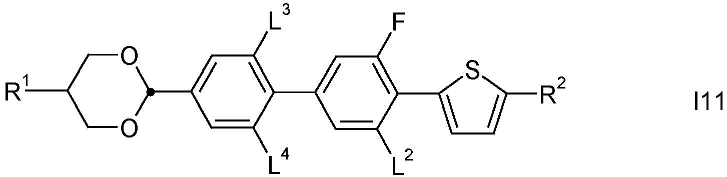 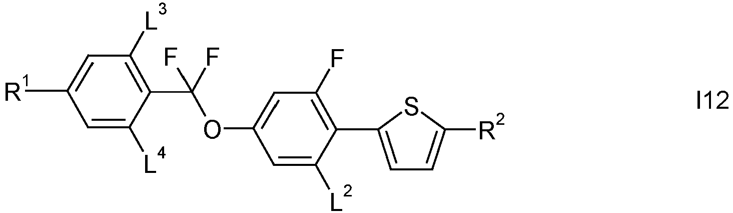 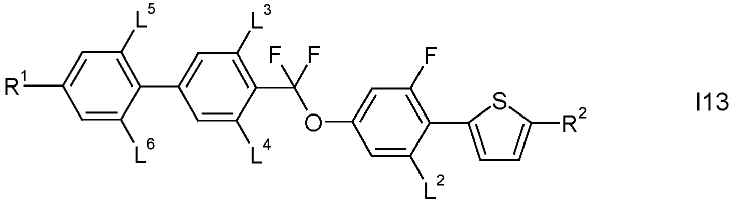 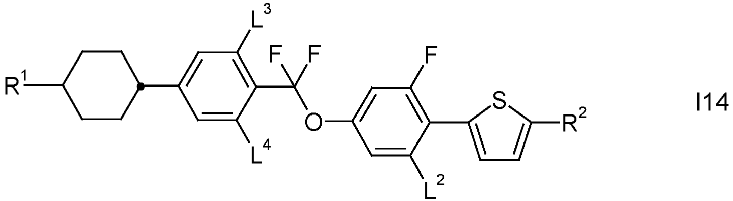 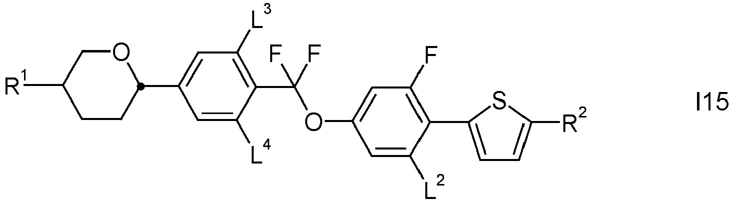 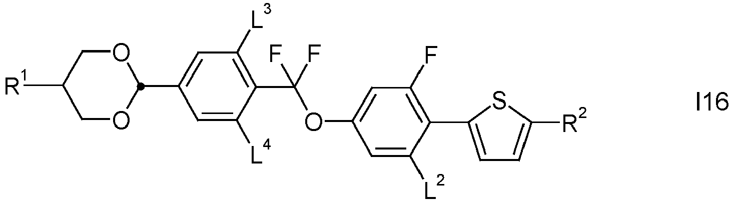 in which R¹ and R² have the meanings indicated in Claim 1 and L¹ to L⁶, independently of one another, denote H or F.

3. LC medium according to Claim 1 or 2, **characterised in that**, in formula I, m denotes 1, n denotes 0 and A⁰ denotes

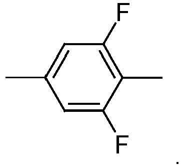

4. LC medium according to one or more of Claims 1 to 3, **characterised in that** it additionally comprises one or more compounds of the formula III and/or IV: 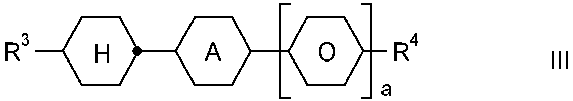 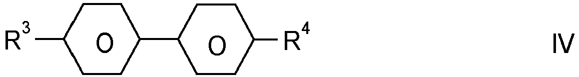 in which
A denotes 1,4-phenylene or trans-1,4-cyclohexylene,
a is 0 or 1,
R³ denotes alkyl or alkenyl having up to 9 C atoms, and
R⁴ denotes alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another.

5. LC medium according to one or more of Claims 1 to 4, **characterised in that** it additionally comprises one or more compounds selected from the group consisting of the following formulae: 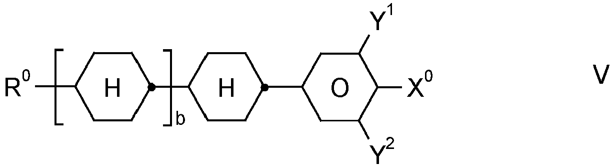 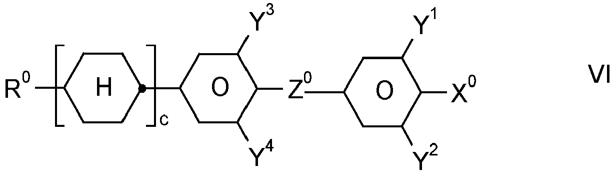 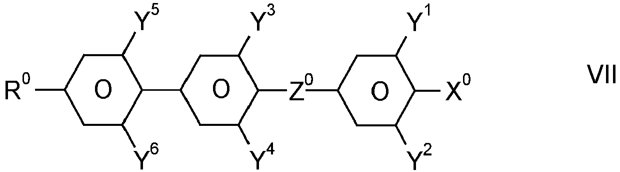 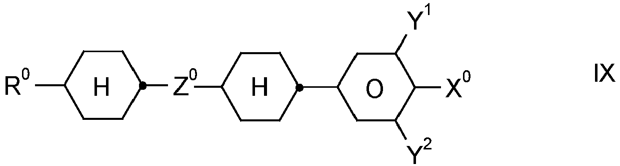 in which
R⁰ denotes an alkyl or alkoxy radical having 1 to 15 C atoms, where, in addition, one or more CH₂ groups in these radicals may in each case be replaced, independently of one another, by -C≡C-, -CF₂O-, -CH=CH-, 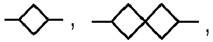 -O-, -CO-O-or -O-CO- in such a way that O atoms are not linked directly to one another, and in which, in addition, one or more H atoms may be replaced by halogen,
X⁰ denotes F, Cl, CN, SF₅, SCN, NCS, a halogenated alkyl radical, halogenated alkenyl radical, halogenated alkoxy radical or halogenated alkenyloxy radical, in each case having up to 6 C atoms,
Y¹⁻⁶ in each case, independently of one another, denote H or F,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- or -OCF₂-, in the formulae V and VI also a single bond, and
b and c in each case, independently of one another, denote 0 or 1.

6. LC medium according to one or more of Claims 1 to 5, **characterised in that** the compounds of the formula II are selected from the group of the compounds of the formulae II1 to II5,

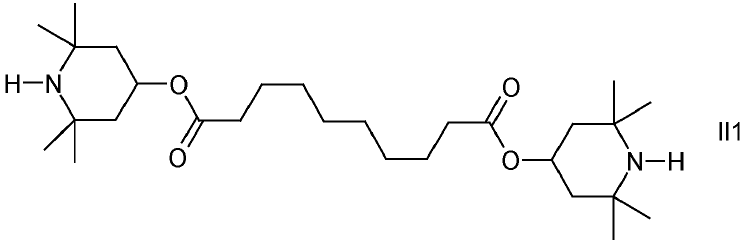

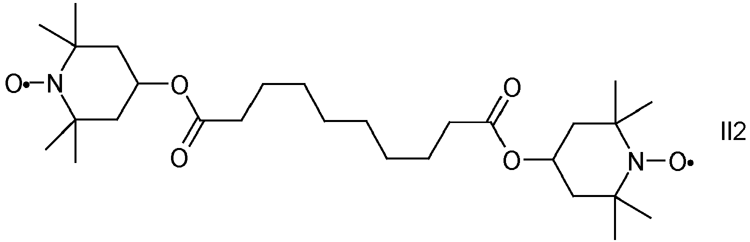

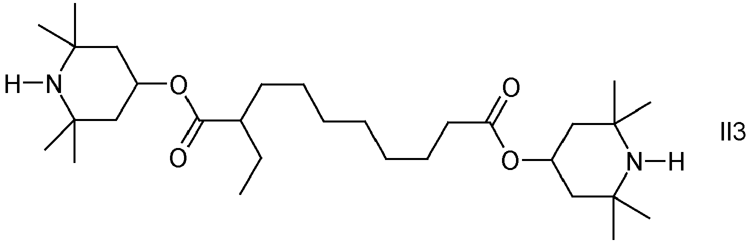

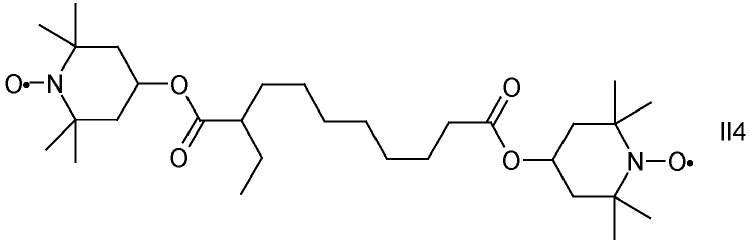

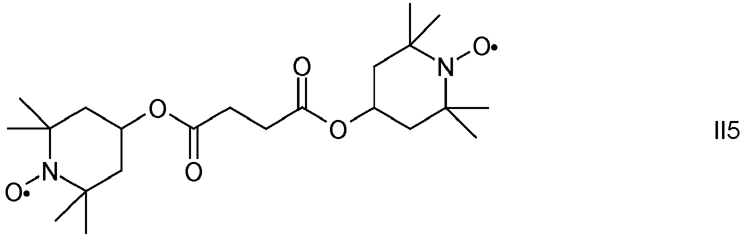

7. LC medium according to one or more of Claims 1 to 6, **characterised in that** the total concentration of the compounds of the formula I in the medium as a whole is 1% to 25%.

8. Use of an LC medium according to one or more of Claims 1 to 7 for an electro-optical device.

9. LC display containing an LC medium according to one or more of Claims 1 to 7.

10. Display according to Claim 9, **characterised in that** it is based on the IPS or FFS effect.

11. Display according to Claim 9 or 10, **characterised in that** it has an active-matrix addressing device.

12. Process for the preparation of an LC medium according to one or more of Claims 1 to 7, **characterised in that** one or more compounds of the formula I are mixed with one or more compounds of the formula II and with one or more further mesogenic compounds.

## Revendications

1. Milieu LC, **caractérisé en ce qu'**il comprend un ou plusieurs composé(s) de la formule I, 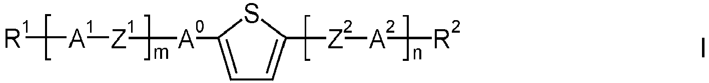 dans laquelle les radicaux individuels présentent les significations qui suivent :
R¹ et R² représentent H, F, Cl, Br, -CN, -SCN, -NCS, SFs ou alkyle en chaîne droite ou ramifié qui comporte de 1 à 12 atome(s) de C, où, en outre, un ou plusieurs groupe(s) CH₂ non adjacents peut/peuvent dans chaque cas être remplacé(s), indépendamment les uns des autres, par -CH=CH-, -C≡C-, -O-, -CO-, -CO-O-, -O-CO-, -O-CO-O- de telle sorte que des atomes de O ne soient pas liés directement les uns aux autres, et où, en outre, un ou plusieurs atome(s) de H peut/peuvent être remplacé(s) par F, Cl ou Br,
A⁰, A¹, A² représentent dans chaque cas, de manière indépendante les uns des autres, phénylène-1,4-diyle, où, en outre, un ou deux groupe(s) CH peut/peuvent être remplacé(s) par N et un ou plusieurs atome(s) de H peut/ peuvent être remplacé(s) par halogène, CN, CH₃, CHF₂, CH₂F, CF₃, OCH₃, OCHF₂ ou OCF₃, cyclohexane-1,4-diyle, où, en outre, un ou deux groupe(s) CH₂ non adjacents peut/peuvent être remplacé(s), de manière indépendante l'un de l'autre, par O et/ou par S et un ou plusieurs atome(s) de H peut/peuvent être remplacé(s) par F, ou représentent cyclohexène-1,4-diyle, bicyclo[1.1.1]pentane-1,3-diyle, bicyclo[2.2.2]-octane-1,4-diyle, spiro[3.3]heptane-2,6-diyle, tétra-hydropyran-2,5-diyle ou 1,3-dioxane-2,5-diyle,
Z¹ et Z² représentent dans chaque cas, de manière indépendante l'un de l'autre, -CF₂O-, -OCF₂-, -CH₂O-, -OCH₂-, -CO-O-, -O-CO-, -C₂H₄-, -C₂F₄-, -CF₂CH₂-, -CH₂CF₂-, -CFHCFH-, -CFHCH₂-, -CH₂CFH-, -CF₂CFH-, -CFHCF₂-, -CH=CH-, -CF=CH-, -CH=CF-, -CF=CF-, -C≡C- ou une liaison simple, et
m et n représentent dans chaque cas, de manière indépendante l'un de l'autre, 0, 1, 2 ou 3,
et
un ou plusieurs composé(s) qui est/sont sélectionné(s) parmi le groupe des composés de la formule II selon une concentration totale de 50 ppm à 2000 ppm, 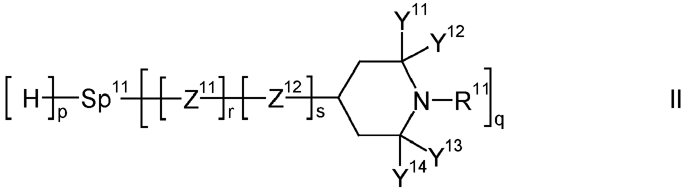 dans laquelle
q représente 1 ou 2,
p représente (2-q),
Z¹¹ et Z¹² représentent, de manière indépendante l'un de l'autre -O-, -(C=O)- ou une liaison simple, mas ne représentent pas tous deux simultanément -O-,
r et s représentent, de manière indépendante l'un de l'autre, 0 ou 1,
Y¹¹ à Y¹⁴ représentent dans chaque cas, de manière indépendante les uns des autres, alkyle qui comporte de 1 à 4 atome(s) de C et à titre d'alternative également, indépendamment les uns des autres, une paire ou les deux paires parmi les paires (Y¹¹ et Y¹²) et (Y¹³ et Y¹⁴) représente(nt) en association un groupe divalent qui comporte de 3 à 6 atomes de C,
R¹¹ représente pour chaque occurrence, de manière indépendante les uns des autres, H, alkyle, O-alkyle, O-cycloalkyle, O• ou OH,
Sp¹¹ représente alkyle en chaîne droite ou ramifié qui comporte de 2 à 20 atomes de C, où un groupe -CH₂- ou les groupes d'une pluralité de groupes -CH₂- peut/ peuvent être remplacé(s) par -O-, mais deux groupes -CH₂- adjacents ne peuvent pas être remplacés par -O-, ou représente un radical hydrocarbone qui contient une unité cycloalkyle ou alkylcycloalkyle et où un groupe -CH₂- ou les groupes d'une pluralité de groupes -CH₂-peut/peuvent être remplacé(s) par -O-, mais deux groupes -CH₂- adjacents ne peuvent pas être remplacés par -O-,
et
un ou plusieurs composé(s) de la formule VIII-1a, 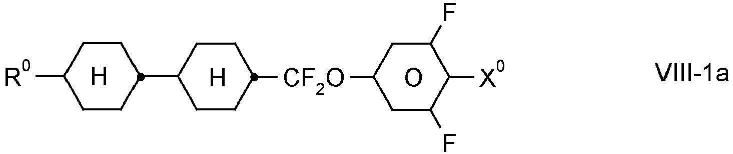 dans laquelle
R⁰ représente un radical alkyle ou alcoxy qui comporte de 1 à 15 atome(s) de C, où, en outre, un ou plusieurs groupe(s) CH₂ dans ces radicaux peut/peuvent dans chaque cas être remplacé(s), de manière indépendante les uns des autres, par -C≡C-, -CF₂O-, -CH=CH-, 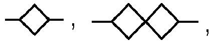 -O-, -CO-O-ou -O-CO- de telle sorte que des atomes de O ne soient pas liés directement les uns aux autres, et où, en outre, un ou plusieurs atome(s) de H peut/peuvent être remplacé(s) par halogène,
X⁰ représente F, Cl, CN, SF₅, SCN, NCS, un radical alkyle halogéné, un radical alkényle halogéné, un radical alcoxy halogéné ou un radical alkényloxy halogéné, dans chaque cas qui comporte jusqu'à 6 atomes de C,
et
un ou plusieurs composé(s) qui est/sont sélectionné(s) parmi le groupe qui est constitué par les formules qui suivent : 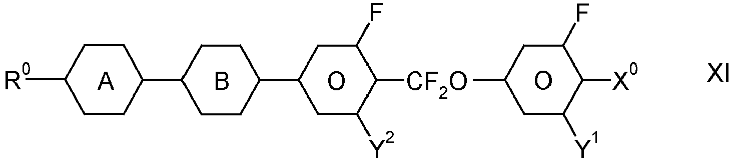 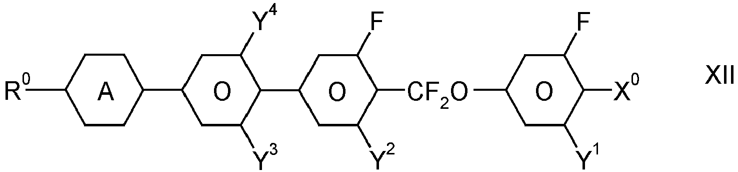 dans lesquelles
R⁰ représente un radical alkyle ou alcoxy qui comporte de 1 à 15 atome(s) de C, où, en outre, un ou plusieurs groupe(s) CH₂ dans ces radicaux peut/peuvent dans chaque cas être remplacé(s), de manière indépendante les uns des autres, par -C≡C-, -CF₂O-, -CH=CH-, 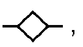 , 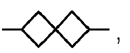 , -O-, -CO-O- ou -O-CO- de telle sorte que des atomes de O ne soient pas liés directement les uns aux autres, et où, en outre, un ou plusieurs atome(s) de H peut/peuvent être remplacé(s) par halogène,
X⁰ représente F, Cl, CN, SF₅, SCN, NCS, un radical alkyl halogéné, un radical alkényle halogéné, un radical alcoxy halogéné, un radical alkényloxy halogéné, dans chaque cas qui comporte jusqu'à 6 atomes de C,
Y¹⁻⁴ représentent dans chaque cas, de manière indépendante les uns des autres, H ou F, et 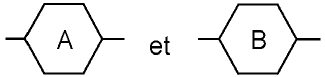
représentent dans chaque cas, de manière indépendante l'un de l'autre 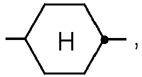 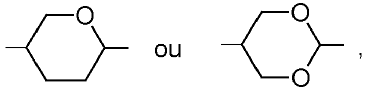 où le milieu présente une anisotropie diélectrique Δε ≥ +9.

2. Milieu LC selon la revendication 1, **caractérisé en ce qu'**il comprend un ou plusieurs composé(s) de la formule I qui est/sont sélectionné(s) parmi le groupe des composés I1 à I16, 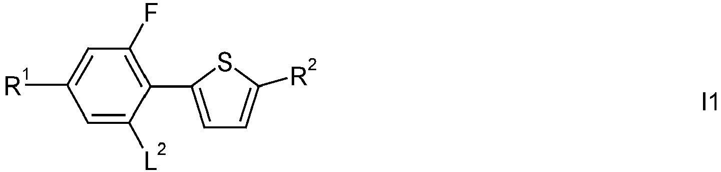 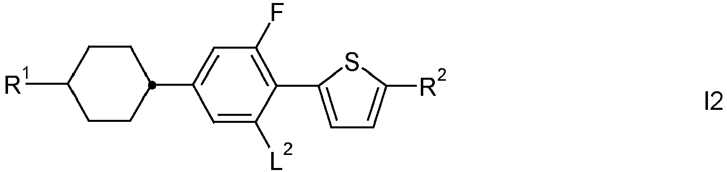 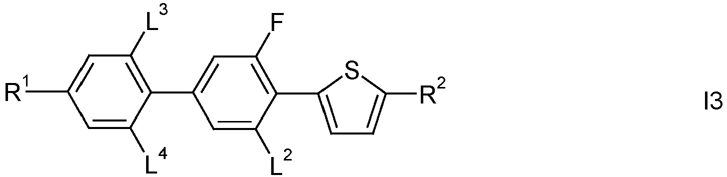 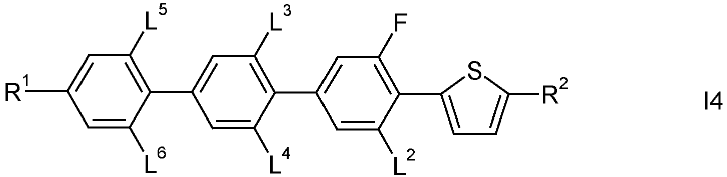 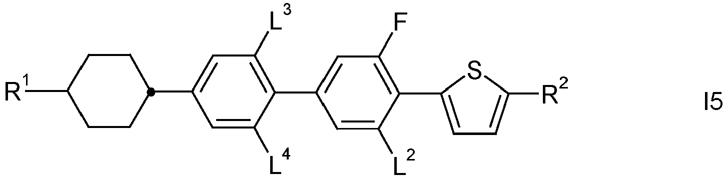 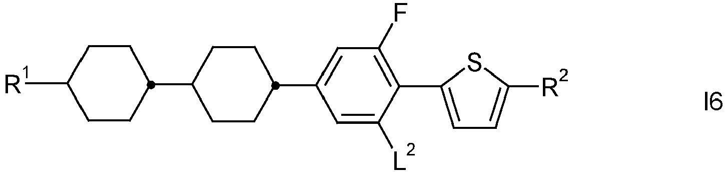 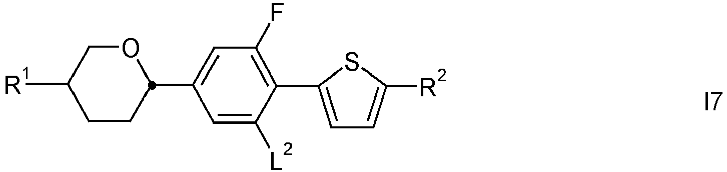 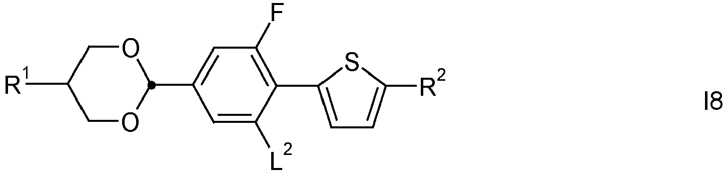 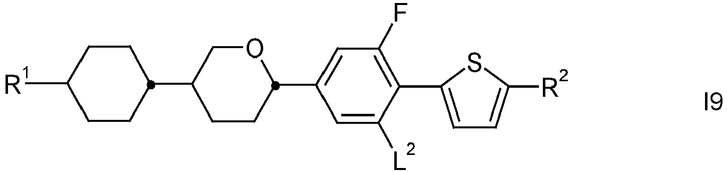 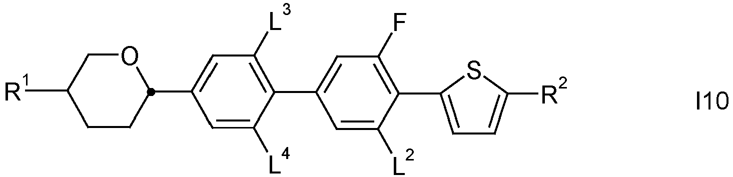 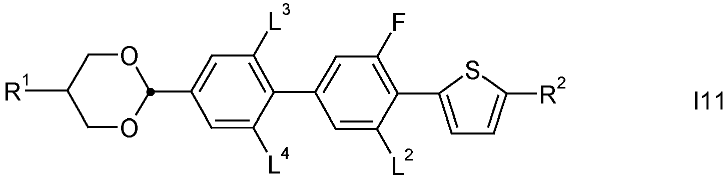 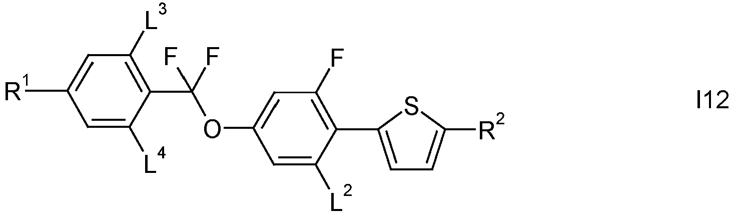 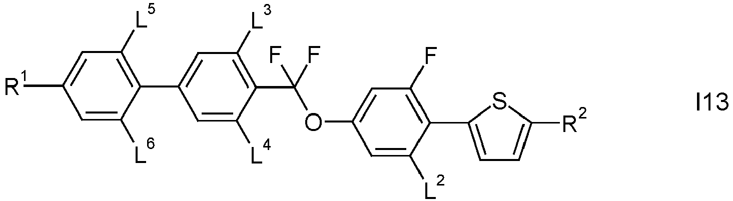 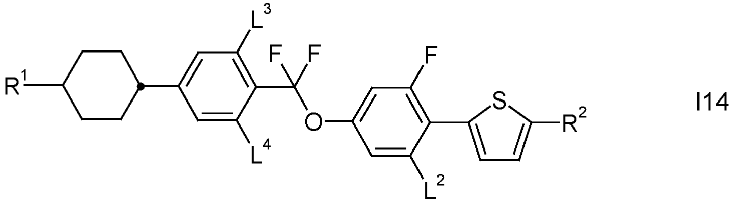 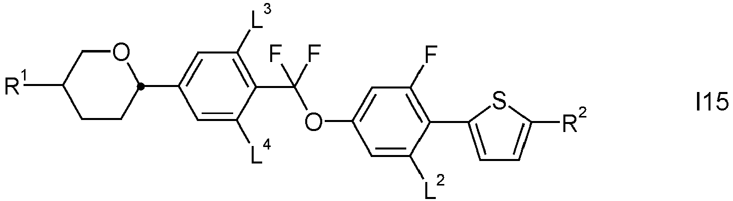 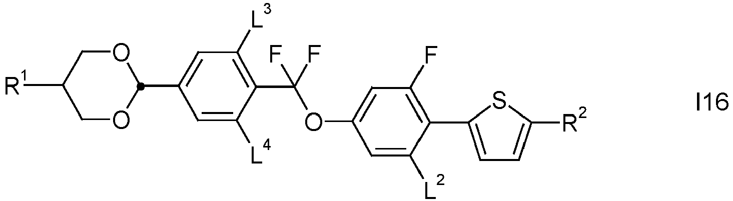 dans lesquels R¹ et R² présentent les significations qui ont été indiquées selon la revendication 1 et L¹ à L⁶ représentent, de manière indépendante les uns des autres, H ou F.

3. Milieu LC selon la revendication 1 ou 2, **caractérisé en ce que**, dans la formule I, m représente 1, n représente 0 et A⁰ représente

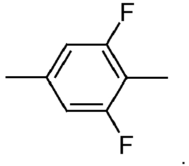

4. Milieu LC selon une ou plusieurs des revendications 1 à 3, **caractérisé en ce qu'**il comprend de façon additionnelle un ou plusieurs composé(s) de la formule III et/ou de la formule IV : 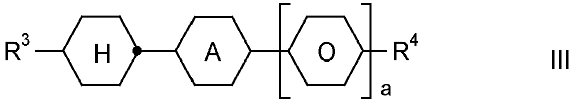 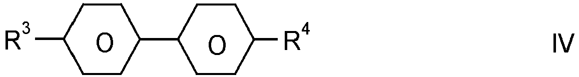 dans lesquelles
A représente 1,4-phénylène ou trans-1,4-cyclohexylène,
a est 0 ou 1,
R³ représente alkyle ou alkényle qui comporte jusqu'à 9 atomes de C, et
R⁴ représente alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres.

5. Milieu LC selon une ou plusieurs des revendications 1 à 4, **caractérisé en ce qu'**il comprend de façon additionnelle un ou plusieurs composé(s) qui est/sont sélectionné(s) parmi le groupe qui est constitué par les formules qui suivent : 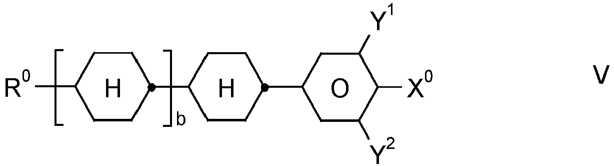 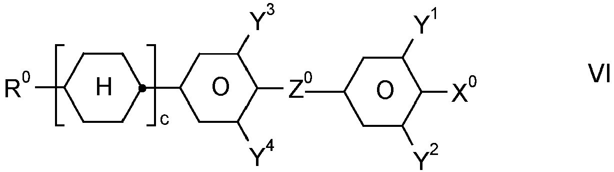 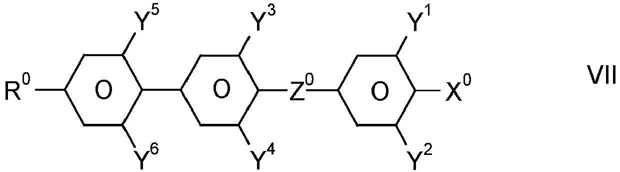 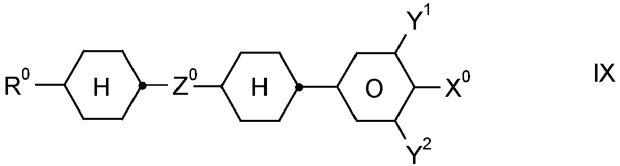 dans lesquelles
R⁰ représente un radical alkyle ou alcoxy qui comporte de 1 à 15 atome(s) de C, où, en outre, un ou plusieurs groupe(s) CH₂ dans ces radicaux peut/peuvent dans chaque cas être remplacé(s), de manière indépendante les uns des autres, par -C≡C-, -CF₂O- , -CH=CH-, 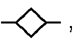 , 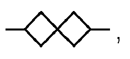 , -O-, -CO-O- ou -O-CO- de telle sorte que des atomes de O ne soient pas liés directement les uns aux autres, et où, en outre, un ou plusieurs atome(s) de H peut/peuvent être remplacé(s) par halogène,
X⁰ représente F, Cl, CN, SF₅, SCN, NCS, un radical alkyle halogéné, un radical alkényle halogéné, un radical alcoxy halogéné, un radical alkényloxy halogéné, dans chaque cas qui comporte jusqu'à 6 atomes de C,
Y¹⁻⁶ représentent dans chaque cas, de manière indépendante les uns des autres, H ou F,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- ou -OCF₂-, dans les formules V et VI également une liaison simple, et
b et c représentent dans chaque cas, de manière indépendante l'un de l'autre, 0 ou 1.

6. Milieu LC selon une ou plusieurs des revendications 1 à 5, **caractérisé en ce que** les composés de la formule II sont sélectionnés parmi le groupe des composés des formules II1 à II5,

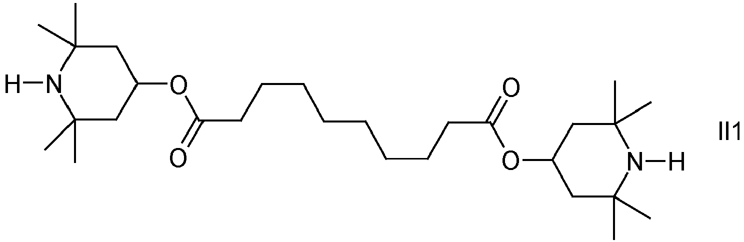

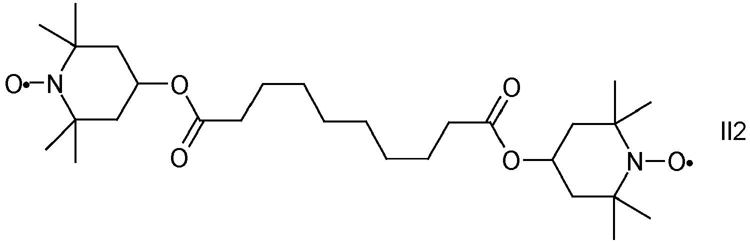

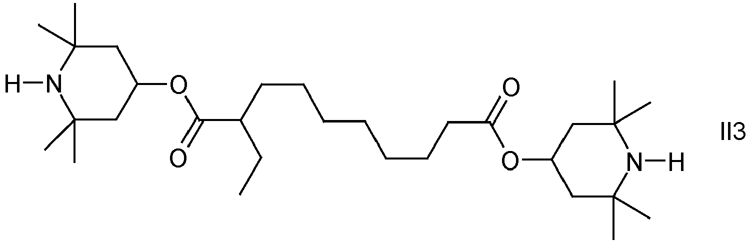

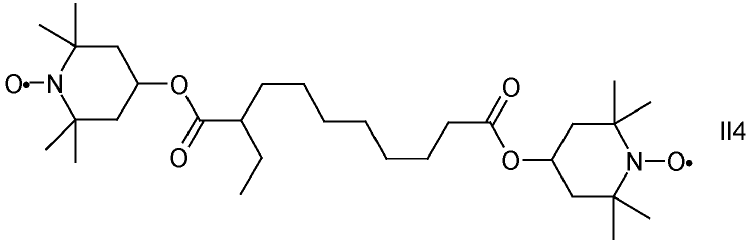

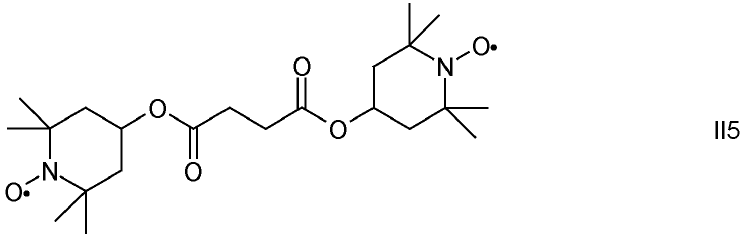

7. Milieu LC selon une ou plusieurs des revendications 1 à 6, **caractérisé en ce que** la concentration totale des composés de la formule I dans le milieu pris dans sa globalité est comprise entre 1 % et 25 %.

8. Utilisation d'un milieu LC selon une ou plusieurs des revendications 1 à 7 pour un dispositif électro-optique.

9. Affichage LC contenant un milieu LC selon une ou plusieurs des revendications 1 à 7.

10. Affichage selon la revendication 9, **caractérisé en ce qu'**il est basé sur l'effet IPS ou FFS.

11. Affichage selon la revendication 9 ou 10, **caractérisé en ce qu'**il comporte un dispositif d'adressage par matrice active.

12. Procédé pour la préparation d'un milieu LC selon une ou plusieurs des revendications 1 à 7, **caractérisé en ce qu'**un ou plusieurs composé(s) de la formule I est/sont mélangé(s) avec un ou plusieurs composé(s) de la formule II et avec un ou plusieurs autre(s) composé(s) mésogène(s).
